# EUROPEAN PATENT APPLICATION

(11) **EP 4 644 100 A1**
(43) Date of publication of application: **05.11.2025**
(21) Application number: 25159072.5
(22) Date of filing: 20.02.2025
(51) Int. Cl.: B29C 70/30, B25J 9/02, B25J 9/04, B25J 15/00, B25J 15/06, B29C 31/08, B29C 70/38, B29C 70/54, B65G 47/91, B65H 5/08, B65H 5/14, B65H 29/00

(54) **COMPOSITE TRANSFER SYSTEM WITH PLURALITY OF COMPOSITE POSITIONING FLIPPERS**

(30) Priority: 01.05.2024 US 202418652358
(71) Applicant: The Boeing Company, Arlington, VA 22202 (US)
(72) Inventor: Noronha, Colin, Arlington, 22202 (US); Madival, Goutam Manjunath, Arlington, 22202 (US); Dong, Shuonan, Arlington, 22202 (US); Studley, Silas Lawton, Arlington, 22202 (US); McCann, Lance Oliver, Arlington, 22202 (US)
(74) Representative: Witte, Weller & Partner Patentanwälte mbB

(57) **Abstract**

A composite transfer cell and associated components and methods are presented. The composite transfer cell comprises a delivery system on a first side of the composite transfer cell; a tool on a second side of the composite transfer cell; and a composite transfer system between the first side and the second side of the composite transfer cell, the composite transfer system comprising a plurality of flipper arms independently movable in a vertical direction and rotatingly movable to lift and place a composite charge from the delivery system to the tool.

## Description

### BACKGROUND INFORMATION

### 1. Field:

The present disclosure relates generally to composite positioning and more specifically to positioning a composite charge onto a tool.

### 2. Background:

Longitudinal composite structures, such as aircraft stringers, can present manufacturing challenges. Currently composite stringers are laid up by hand and cranes are used for material handling. Hand lay-up and crane handling are undesirably slow and costly.

Therefore, it would be desirable to have a method and apparatus that takes into account at least some of the issues discussed above, as well as other possible issues. For example, it would be desirable to provide a composite handling system that would be at least one of more flexible, faster, or less costly than a crane system. As another example, it would be desirable to provide a composite handling system within an automated composite positioning system.

### SUMMARY

An embodiment of the present disclosure provides a composite transfer cell. The composite transfer cell comprises a delivery system on a first side of the composite transfer cell, a tool on a second side of the composite transfer cell, and a composite transfer system between the first side and the second side of the composite transfer cell. The composite transfer system comprises a plurality of flipper arms independently movable in a vertical direction and rotatingly movable to lift and place a composite charge from the delivery system to the tool.

Another embodiment of the present disclosure provides a composite transfer system. The composite transfer system comprises a plurality of vertical towers and a plurality of flipper arms connected to the plurality of vertical towers by a plurality of vertical motors and a plurality of rotary motors.

Yet another embodiment of the present disclosure provides a pneumatic and mechanical connector comprising a first joint configured to allow movement in a first axis, a second joint configured to allow movement in a second axis, and a centering component.

A yet further embodiment of the present disclosure provides a composite charge transportation pallet. The composite charge transportation pallet comprises a layup pallet portion; and a nesting preform transfer portion removable from the layup pallet portion.

A further embodiment of the present disclosure provides a method of positioning a composite charge. A composite charge on a nesting preform transfer portion of a composite charge transportation pallet is lifted. The composite charge and the nesting preform transfer portion are rotated. The composite charge is lowered towards a tool to place the composite charge in contact with a tool.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figures 2A** **and** **2B** are an illustration of a block diagram of a manufacturing environment in accordance with an illustrative embodiment;
**Figure 3** is an illustration of an isometric view of a portion of a composite transfer cell in a manufacturing environment in accordance with an illustrative embodiment;
**Figure 4** is an illustration of an isometric view of composite transfer cell with a composite charge transportation pallet within a manufacturing environment in accordance with an illustrative embodiment;
**Figure 5** is an illustration of an isometric view of a composite transfer system lifting a portion of a composite charge transportation pallet in a manufacturing environment in accordance with an illustrative embodiment;
**Figure 6** is an illustration of an isometric view of a composite transfer system positioning a portion of a composite charge transportation pallet over a tool in a manufacturing environment in accordance with an illustrative embodiment;
**Figure 7** is an illustration of an isometric view of a composite transfer system positioning a portion of a composite charge transportation pallet over a tool in a manufacturing environment in accordance with an illustrative embodiment;
**Figure 8** is an illustration of an isometric view of a composite transfer system placing a composite charge on a composite charge transportation pallet in contact with a tool in a manufacturing environment in accordance with an illustrative embodiment;
**Figure 9** is an illustration of an isometric view of a composite transfer system positioning after placing a composite charge onto a tool in a manufacturing environment in accordance with an illustrative embodiment;
**Figure 10** is an illustration of an isometric view of a composite transfer system placing a curvature into a composite charge on a composite charge transportation pallet in a manufacturing environment in a manufacturing environment in accordance with an illustrative embodiment;
**Figure 11** is an illustration of an isometric view of a pneumatic and mechanical connector for a composite transfer system in accordance with an illustrative embodiment;
**Figure 12** is an illustration of a bottom view of a pneumatic and mechanical connector for a composite transfer system in accordance with an illustrative embodiment;
**Figure 13** is an illustration of a phantom side view of a pneumatic and mechanical connector for a composite transfer system in accordance with an illustrative embodiment;
**Figure 14** is an illustration of an exploded view of a pneumatic and mechanical connector for a composite transfer system in accordance with an illustrative embodiment;
**Figure 15** is an illustration of an isometric view of a pneumatic and mechanical connector in accordance with an illustrative embodiment;
**Figure 16** is an illustration of a front view of a composite transfer system placing a curvature into a composite charge transportation pallet in a manufacturing environment in accordance with an illustrative embodiment;
**Figure 17** is an illustration of an exploded view of a composite charge transportation pallet in a manufacturing environment in accordance with an illustrative embodiment;
**Figures 18A** **and** **18B** are a flowchart of a method of positioning a composite charge in accordance with an illustrative embodiment;
**Figure 19** is an illustration of an aircraft manufacturing and service method in a form of a block diagram in accordance with an illustrative embodiment; and
**Figure 20** is an illustration of an aircraft in a form of a block diagram in which an illustrative embodiment may be implemented.

### DETAILED DESCRIPTION

The illustrative examples present a composite transfer cell comprising a composite transfer system that can pick up a flat composite charge from a delivery system such as a conveyor, flip it over about a longitudinal axis, and position it onto a tool. By flipping the composite charge one hundred and eighty degrees, a face of the composite charge that is exposed while on the delivery system is placed into contact with the tool. In some illustrative examples, the composite transfer system can place the composite charge into a lengthwise contour prior to positioning the composite charge onto the tool. The composite transfer cell contains a two-part composite charge transportation pallet that interfaces with multiple flipper arms of the composite transfer system. The plurality of flipper arms can be independently controlled to introduce a contour into the composite charge.

The layup pallet portion of the composite charge transportation pallet acts as a base and sits flat on a conveyor. A nesting preform transfer portion of the composite charge transportation pallet is a top of the composite charge transportation pallet. The nesting preform transfer portion is flexible and can be connected to the plurality of flipper arms by pneumatic and mechanical connectors.

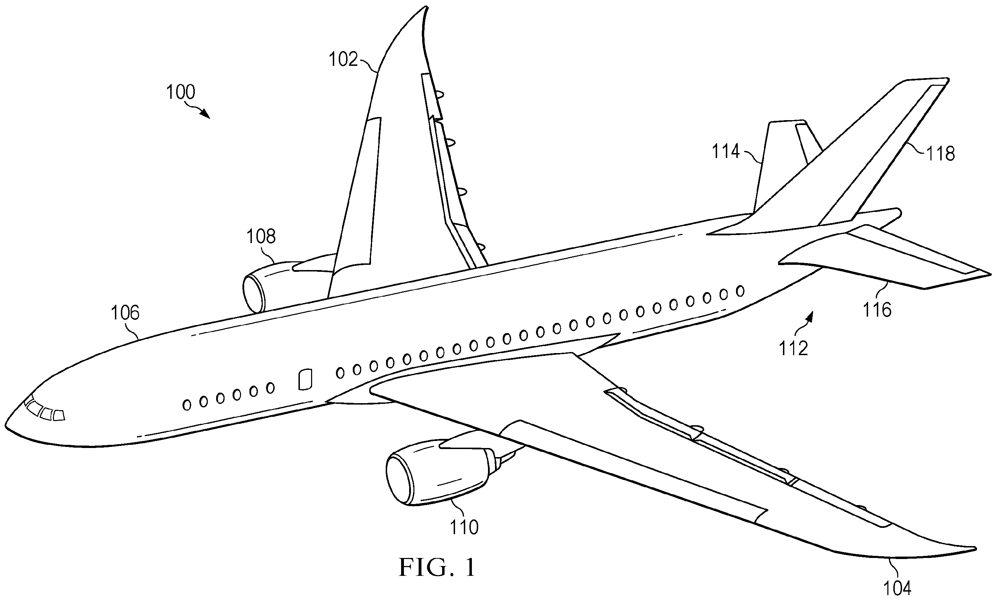

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Composite components of aircraft **100** can be manufactured using the composite transfer cell of the illustrative examples. Aircraft **100** is an example of an aircraft that can have components manufactured using the method of the illustrative examples. A composite component of at least one of wing **102,** wing **104,** or body **106** can be manufactured using at least one of a composite transfer cell and methods of the illustrative examples.

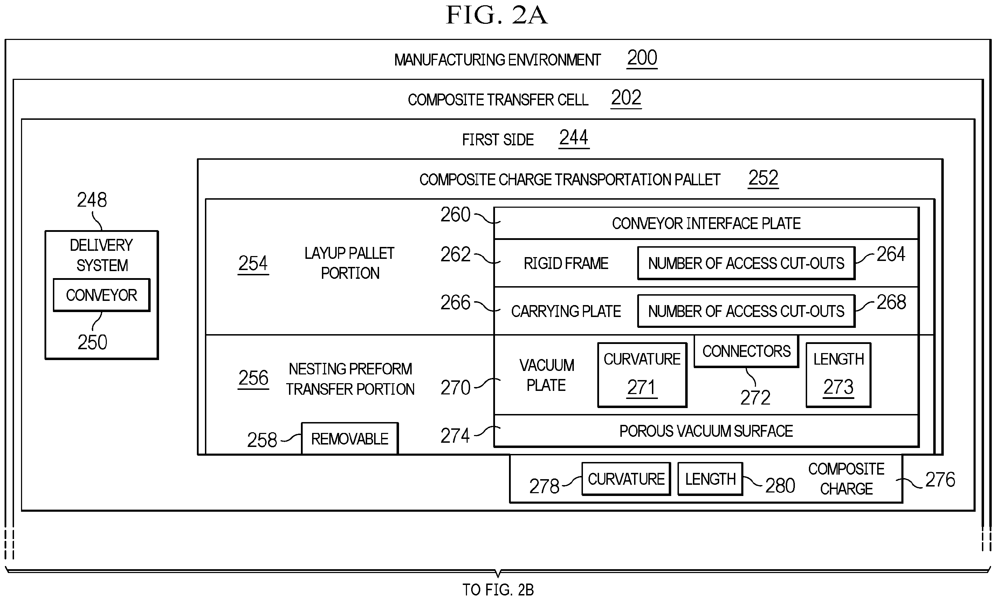

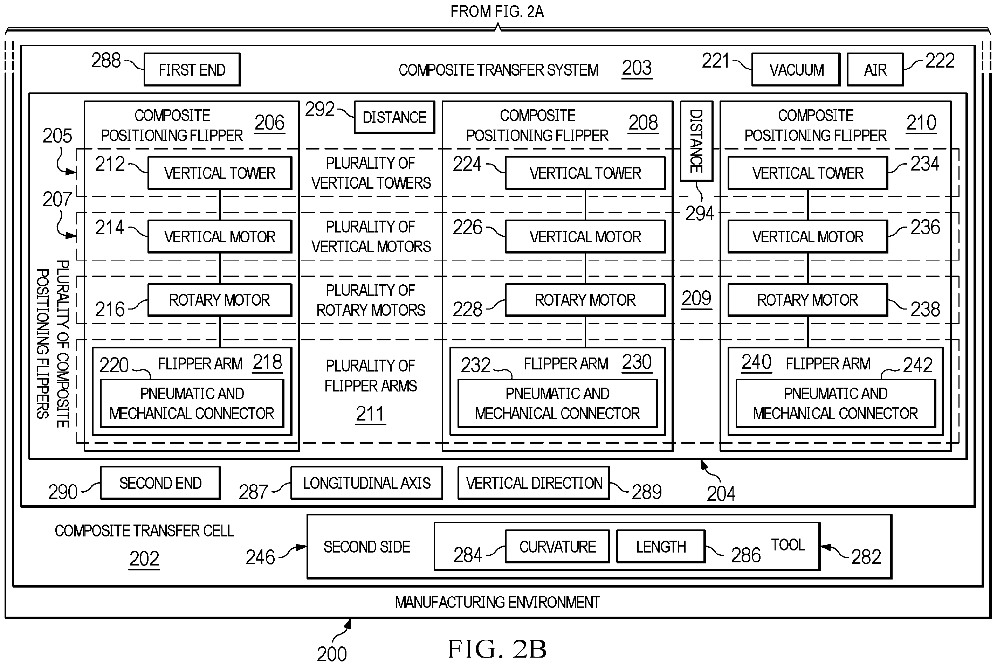

Turning now to **Figures 2A** **and** **2B****,** an illustration of a block diagram of a manufacturing environment is depicted in accordance with an illustrative embodiment. Manufacturing environment **200** comprises composite transfer cell **202** configured to pick up composite charge **276,** flip composite charge **276** over longitudinal axis **287,** and position composite charge **276** onto tool **282.** In some illustrative examples, composite charge **276** can be referred to as a composite layup or a composite preform. Composite charge **276** is formed of multiple layers of fiber-reinforced polymeric matrix. Composite transfer cell **202** can be used in manufacturing any desirable composite part of aircraft **100** of **Figure 1****.**

Composite transfer cell **202** comprises a composite transfer system **203** configured to pick up composite charge **276** from delivery system **248** such as conveyor **250,** flip composite charge **276** over about longitudinal axis **287,** and position composite charge **276** onto tool **282.** By flipping composite charge **276** one hundred and eighty degrees, a face of the composite charge **276** that is exposed while on delivery system **248** is placed into contact with tool **282.** In some illustrative examples, composite transfer system **203** can place composite charge **276** into a lengthwise contour prior to positioning composite charge **276** onto tool **282.** Composite transfer cell **202** contains composite charge transportation pallet **252** that interfaces with multiple flipper arms of composite transfer system **203.** Plurality of flipper arms **211** can be independently controlled to introduce a contour, curvature **278,** into composite charge 276.

Composite charge **276** can have any desirable shape or size. In some illustrative examples, composite charge **276** is planar prior to being lifted and transported by plurality of flipper arms **211.** In some illustrative examples, plurality of flipper arms **211** form composite charge **276** to match tool **282** prior to positioning composite charge **276** onto tool **282.** In some illustrative examples, plurality of flipper arms **211** form curvature **278** into composite charge **276** so that composite charge **276** matches curvature **284** of tool **282.**

Composite transfer cell **202** comprises delivery system **248** on first side **244** of composite transfer cell **202,** tool **282** on second side **246** of composite transfer cell **202,** and composite transfer system **203** between first side **244** and second side **246** of composite transfer cell **202.** Composite transfer system **203** comprises plurality of flipper arms **211** independently movable in vertical direction **289** and rotatingly movable to lift and place composite charge **276** from delivery system **248** to tool **282.** In some illustrative examples, plurality of flipper arms **211** is also independently movable in rotation about longitudinal axis **287.**

Composite transfer system **203** further comprises plurality of vertical towers **205,** wherein plurality of flipper arms **211** are connected to plurality of vertical towers **205** by plurality of vertical motors **207** and plurality of rotary motors **209.** In this illustrative example, plurality of flipper arms **211** are portions of plurality of composite positioning flippers **204.** Each composite positioning flipper of plurality of composite positioning flippers **204** comprises a respective flipper arm and accompanying systems for movement and control of the respective flipper arm.

Plurality of vertical motors **207** can move respective flipper arms of plurality of flipper arms **211** in vertical direction **289** along respective vertical towers of plurality of vertical towers **205.** Each vertical motor of plurality of vertical motors **207** can move a respective flipper arm in vertical direction **289** using a track, a rail, wheels, a pulley system, or any other desirable type of movement assembly.

Plurality of rotary motors **209** can rotate respective flipper arms of plurality of flipper arms **211** relative to respective vertical towers of plurality of vertical towers **205.** Each rotary motor of plurality of rotary motors **209** can rotate a respective flipper arm using a hinge, pivot point, pivot joint, or any other desirable movable connection. In some illustrative examples, movement of plurality of flipper arms **211** in vertical direction **289** moves plurality of rotary motors **209** and associated hinge, pivot point, pivot joint, or other desirable movable connection in vertical direction **289.**

As depicted, plurality of composite positioning flippers **204** comprises three composite positioning flippers: composite positioning flipper **206,** composite positioning flipper **208,** and composite positioning flipper **210.** In other non-depicted illustrative examples, plurality of composite positioning flippers **204** comprises more than three composite positioning flippers. In other non-depicted illustrative examples, plurality of composite positioning flippers **204** comprises any desirable quantity of flippers based on at least one of length **280** or material of composite charge **276.** In some illustrative examples, composite transfer system **203** is modular and composite positioning flippers can be added or removed from plurality of composite positioning flippers **204** based on at least one of length **280** or material of composite charge **276.** Composite positioning flipper **206** comprises vertical tower **212,** vertical motor **214,** rotary motor **216,** and flipper arm **218.** Flipper arm **218** has pneumatic and mechanical connector **220** configured to connect flipper arm **218** to composite charge transportation pallet **252.** Vertical motor **214** is configured to move flipper arm **218** in vertical direction **289** along vertical tower **212.** In some illustrative examples, vertical motor **214** can move flipper arm **218** in vertical direction **289** using a track, a rail, wheels, a pulley system, or any other desirable type of movement assembly. Rotary motor **216** is configured to rotate flipper arm **218** from first side **244** to second side **246.** Rotary motor **216** is configured to rotate flipper arm **218** about longitudinal axis **287** of composite transfer system **203.** Rotary motor **216** can rotate flipper arm **218** using a hinge, pivot point, pivot joint, or any other desirable movable connection.

Composite positioning flipper **208** comprises vertical tower **224,** vertical motor **226,** rotary motor **228,** and flipper arm **230.** Flipper arm **230** has pneumatic and mechanical connector **232** configured to connect flipper arm **230** to composite charge transportation pallet **252.** Vertical motor **226** is configured to move flipper arm **230** in vertical direction **289** along vertical tower **224.** In some illustrative examples, vertical motor **226** can move flipper arm **230** in vertical direction **289** using a track, a rail, wheels, a pulley system, or any other desirable type of movement assembly. Rotary motor **228** is configured to rotate flipper arm **230** from first side **244** to second side **246.** Rotary motor **228** is configured to rotate flipper arm **230** about longitudinal axis **287** of composite transfer system **203.** Rotary motor **228** can rotate flipper arm **230** using a hinge, pivot point, pivot joint, or any other desirable movable connection.

Composite positioning flipper **210** comprises vertical tower **234,** vertical motor **236,** rotary motor **238,** and flipper arm **240.** Flipper arm **240** has pneumatic and mechanical connector **242** configured to connect flipper arm **240** to composite charge transportation pallet **252.** Vertical motor **236** is configured to move flipper arm **240** in vertical direction **289** along vertical tower **234.** In some illustrative examples, vertical motor **236** can move flipper arm **240** in vertical direction **289** using a track, a rail, wheels, a pulley system, or any other desirable type of movement assembly. Rotary motor **238** is configured to rotate flipper arm **240** from first side **244** to second side **246.** Rotary motor **238** is configured to rotate flipper arm **240** about longitudinal axis **287** of composite transfer system **203.** Rotary motor **238** can rotate flipper arm **240** using a hinge, pivot point, pivot joint, or any other desirable movable connection.

Plurality of vertical motors **207** enables lifting composite charge **276** on nesting preform transfer portion **256** by plurality of flipper arms **211.** Plurality of vertical motors **207** enables lowering of composite charge **276** onto tool **282** by plurality of flipper arms **211.** Plurality of vertical motors **207** is configured for independent movement of plurality of flipper arms **211.** By moving plurality of flipper arms **211** independently in vertical direction **289,** curvature **278** can be placed into length **280** of composite charge **276.**

In some illustrative examples, each flipper arm of plurality of flipper arms **211** comprises a secondary vertical motor configured to move a portion of a respective flipper arm. In some illustrative examples, a secondary vertical motor enables placing curvature **278** into length **280** of composite charge **276** prior to rotating composite charge **276.** Each flipper arm of plurality of flipper arms **211** comprises a pneumatic and mechanical connector configured to accommodate different vertical positions of plurality of flipper arms **211** to impart curvature **278** in composite charge **276.**

Each flipper arm of plurality of flipper arms 211 comprises a respective pneumatic and mechanical connector. In this illustrative example, flipper arm **218** comprises pneumatic and mechanical connector **220,** flipper arm **230** comprises pneumatic and mechanical connector **232,** and flipper arm **240** comprises pneumatic and mechanical connector **242.**

Each pneumatic and mechanical connector is configured to mechanically connect plurality of flipper arms **211** to composite charge transportation pallet **252.** Composite charge transportation pallet **252** is a two-part pallet. Composite charge transportation pallet **252** has layup pallet portion **254** and nesting preform transfer portion **256** removable **258** from layup pallet portion **254.**

In some illustrative examples, layup pallet portion **254** comprises conveyor interface plate **260** to connect and retain layup pallet portion **254** on delivery system **248.** Conveyor interface plate **260** is connected to rigid frame **262.** Rigid frame **262** is configured to receive pressure from laying up composite charge **276** on composite charge transportation pallet **252.**

In some illustrative examples, layup pallet portion **254** has number of access cut-outs configured to allow access to connectors **272** of nesting preform transfer portion **256.** In this illustrative example, layup pallet portion **254** further comprises rigid frame **262** and carrying plate **266.** Carrying plate **266** is configured to interface with nesting preform transfer portion **256.** Carrying plate **266** comprises number of access cut-outs **268** for allowing pneumatic access to vacuum plate **270.**

Rigid frame **262** and carrying plate **266** have overlapping access cut-outs to allow access to connectors **272** of vacuum plate **270.** In this illustrative example, rigid frame **262** comprises number of access cut-outs **264** and carrying plate **266** comprises number of access cut-outs **268.** Number of access cut-outs **264** and number of access cut-outs **264** overlap each other. A quantity of access cut-outs for layup pallet portion **254** is designed based on a quantity of connectors **272.**

Nesting preform transfer portion **256** comprises vacuum plate **270** and porous vacuum surface **274.** Composite charge **276** is placed in contact with porous vacuum surface **274** of nesting preform transfer portion **256.** Vacuum plate **270** distributes at least one of vacuum or air to porous vacuum surface **274.** Vacuum plate **270** is formed of a material sufficiently flexible to allow for a curvature **271** to be imparted along length **273** of vacuum plate **270.** Vacuum plate **270** is formed of a material sufficiently flexible to allow for curvature **278** to be imparted along length **280** of composite charge **276.**

Each respective pneumatic and mechanical connector is configured to accommodate movements due to different vertical positions of plurality of flipper arms **211** to impart curvature **278** in composite charge **276.** Each pneumatic and mechanical connector on plurality of flipper arms **211** comprises a plurality of joints to allow for movement. In some illustrative examples, each pneumatic and mechanical connector comprises a first joint configured to allow movement in a first axis; a second joint configured to allow movement in a second axis; and a centering component.

In some illustrative examples, the first joint comprises a slider joint. In some illustrative examples, the centering component comprises a number of springs. In some illustrative examples, the second joint comprises a rocker joint. In some illustrative examples, the second joint comprises a ball and socket joint such that the second joint is configured to allow movement in the second axis and a third axis.

Plurality of flipper arms **211** is rotatingly movable about a longitudinal axis **287** of composite transfer system **203.** Longitudinal axis **287** of composite transfer system **203** is parallel to length **286** of tool **282.** In some illustrative examples, longitudinal axis **287** of composite transfer system **203** is also parallel to a longitudinal axis of composite charge **276.**

Plurality of composite positioning flippers **204** are aligned along longitudinal axis **287** of composite transfer system **203.** Composite positioning flipper **206** is separated from composite positioning flipper **208** along longitudinal axis **287** by distance **292.** Composite positioning flipper **208** is separated from composite positioning flipper **210** along longitudinal axis **287** by distance **294.** In some illustrative examples, distance **292** and distance **294** are the same. In some illustrative examples, distance **292** and distance **294** are different. In some illustrative examples, distance **292** and distance **294** are adjustable.

Distance **292** and distance **294** can be set based on curvature **278** of composite charge **276.** A quantity of composite positioning flippers in plurality of composite positioning flippers **204** can be set based on curvature **278** of composite charge **276.**

Composite charge **276** is either laid up or placed onto composite charge transportation pallet **252.** Composite charge transportation pallet **252** is delivered to composite transfer cell **202** by delivery system **248.**

Composite charge **276** on nesting preform transfer portion **256** of composite charge transportation pallet **252** is lifted. Composite transfer system **203** within composite transfer cell **202** lifts composite charge **276** on nesting preform transfer portion **256** using plurality of flipper arms **211.** In some illustrative examples, lifting composite charge **276** on nesting preform transfer portion **256** comprises lifting nesting preform transfer portion **256** using plurality of flipper arms **211** and plurality of vertical motors **207.**

Composite charge **276** and nesting preform transfer portion **256** are rotated. Plurality of flipper arms **211** rotate composite charge **276** on nesting preform transfer portion **256** about longitudinal axis **287** of composite transfer system **203.** In some illustrative examples, rotating composite charge **276** and nesting preform transfer portion **256** comprises rotating plurality of flipper arms **211** using plurality of rotary motors **209.**

By rotating composite charge **276** on nesting preform transfer portion **256** about longitudinal axis **287,** plurality of flipper arms **211** move composite charge **276** on nesting preform transfer portion **256** from first side **244** of composite transfer cell **202** to second side **246** of composite transfer cell **202.** By rotating composite charge **276** on nesting preform transfer portion **256** about longitudinal axis **287,** plurality of flipper arms **211** flip composite charge **276** one hundred and eighty degrees. By flipping composite charge **276** one hundred and eighty degrees, a face of the composite charge **276** that is exposed while on delivery system **248** will be placed into contact with tool **282.** By rotating composite charge **276** on nesting preform transfer portion **256** about longitudinal axis **287,** plurality of flipper arms **211** move up and over plurality of vertical towers **205** so that plurality of flipper arms **211** move from first side **244** to second side **246.**

Composite charge **276** is lowered towards tool **282** to place composite charge **276** in contact with tool **282.** Composite charge **276** is lowered by movement of plurality of flipper arms **211.** In some illustrative examples, lowering composite charge **276** towards tool **282** comprises lowering plurality of flipper arms **211** using plurality of vertical motors **207,** wherein each of plurality of vertical motors **207** independently moves a respective flipper arm of plurality of flipper arms **211.**

Tool **282** is positioned on second side **246** of composite transfer cell **202.** In some illustrative examples, tool **282** has curvature **284.** In those illustrative examples, curvature **278** is placed into composite charge **276** prior to placing composite charge **276** into contact with tool **282.** By placing curvature **278** into composite charge **276,** composite charge **276** matches curvature **284** of tool **282.**

Composite charge **276** is held against nesting preform transfer portion **256** using vacuum **221** supplied to nesting preform transfer portion **256** as composite charge **276** is lifted and then rotated. Vacuum **221** is released when composite charge **276** is in contact with tool **282.** In some illustrative examples, composite charge is pushed against tool **282** with air **222** directed from nesting preform transfer portion **256.**

The illustration of manufacturing environment **200 in** **Figures 2A** **and** **2B** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

Although not depicted in **Figures 2A** **and** **2B****,** mechanical restraints can be present to grip the composite charge against the tool when the composite charge is in contact with the tool and the nesting preform transfer portion. The mechanical restraints can take the form of clips, clamps, needles, or any other desirable type of restraint.

In some illustrative examples, composite transfer system **203** further comprises a respective secondary vertical motor (not depicted) connected to each flipper arm of plurality of flipper arms **211.** In some illustrative examples, each respective secondary vertical motor is configured to move a portion of a respective flipper arm.

In some illustrative examples, actuation on individual arms using secondary vertical motors could allow forming of curvature **278** into composite charge **276** prior to or during rotation of composite charge **276** about longitudinal axis **287.**

To rotate composite charge **276** about longitudinal axis **287,** each rotary motor of plurality of rotary motors **209** is aligned. Each flipper arm can align its respective rotation axis using plurality of vertical motors **207.** When present, the secondary vertical motor (not depicted) can allow each flipper arm of plurality of flipper arms **211** to have an independent vertical position not dependent on the location of a respective rotary motor. Independent vertical movement of each respective flipper arm allows for nesting preform transfer portion **256** with a contour to be flipped. A secondary vertical motor provides an additional z-actuation point for unique z positioning for each respective flipper arm.

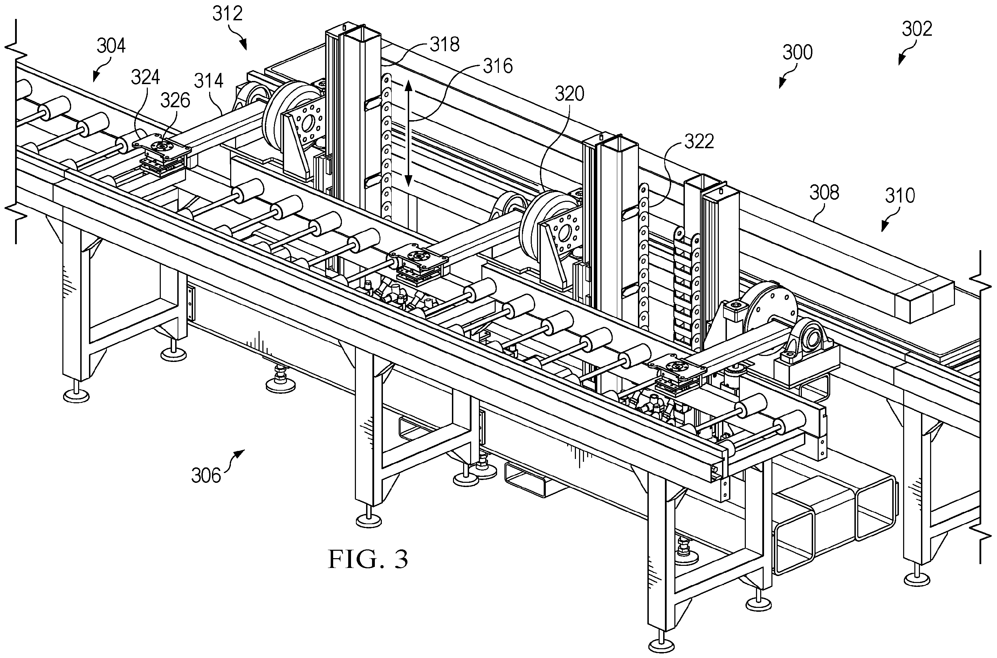

Turning now to **Figure 3****,** an illustration of an isometric view of a portion of a composite transfer cell in a manufacturing environment is depicted in accordance with an illustrative embodiment. Composite transfer cell **300** is depicted in view **302.** In view **302,** delivery system **304** is on first side **306** of composite transfer cell **300.** Tool **308** is on second side **310** of composite transfer cell **300.** Composite transfer system **312** is between first side **306** and second side **310** of composite transfer cell **300.** Composite transfer system **312** comprises plurality of flipper arms **314** independently movable in vertical direction **316** and rotatingly movable to lift and place a composite charge from delivery system **304** to tool **308.**

Plurality of flipper arms **314** is connected to plurality of vertical towers **318** by plurality of vertical motors **322** and plurality of rotary motors **320.** Each of plurality of flipper arms **314** is independently moveable by plurality of vertical motors **322.** A curvature can be imparted into a composite charge held by plurality of flipper arms **314** by independently moving plurality of flipper arms **314** using plurality of vertical motors **322.**

Plurality of flipper arms **314** can be rotated using plurality of rotary motors **320** to move a composite charge from first side **306** to second side **310** of composite transfer cell **300.** Plurality of flipper arms **314** comprise plurality of pneumatic and mechanical connectors **324.** Plurality of pneumatic and mechanical connectors **324** comprise plurality of quick connectors **326** to interface with a composite charge transportation pallet. Plurality of quick connectors **326** mechanically connect plurality of flipper arms **314** to a composite charge transportation pallet. Plurality of pneumatic and mechanical connectors **324** can be used to provide at least one of vacuum or air to a composite charge transportation pallet to hold or release a composite charge.

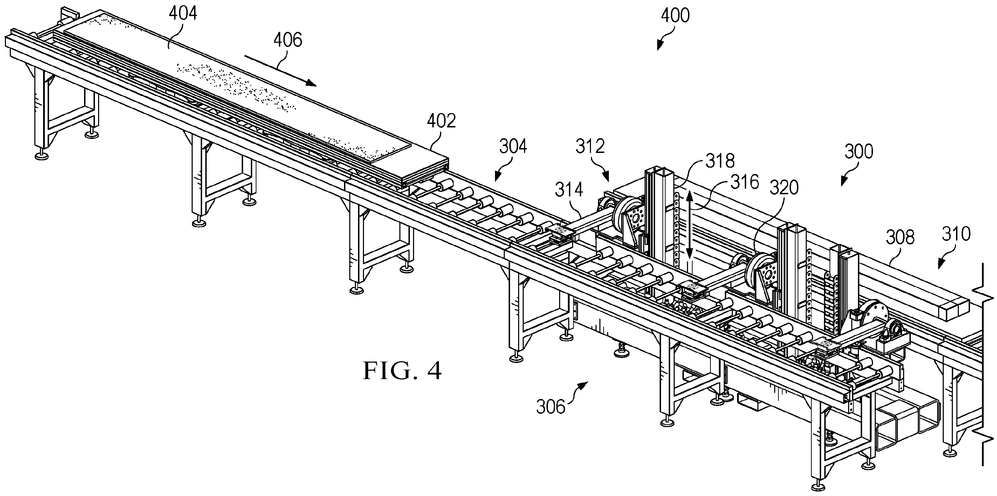

**Figures 4-9** are illustrations of views of the composite transfer cell with composite transfer system **312** receiving composite charge transportation pallet **402** on delivery system **304.** Composite charge **404** is present on composite charge transportation pallet **402.**

Composite charge **404** is lifted on nesting preform transfer portion **502** of composite charge transportation pallet **402.** Layup pallet portion **504** of composite charge transportation pallet **402** is left on delivery system **304.**

Composite charge **404** and nesting preform transfer portion **502** are rotated by plurality of flipper arms **314.** Plurality of flipper arms **314** lower composite charge **404** towards tool **308** to place composite charge **404** in contact with tool **308.**

Turning now to **Figure 4****,** an illustration of an isometric view of composite transfer cell with a composite charge transportation pallet within a manufacturing environment is depicted in accordance with an illustrative embodiment. In view **400,** composite charge transportation pallet **402** is shown on delivery system **304.** Composite charge **404** is present on composite charge transportation pallet **402.** Composite charge **404** can be laid up on or picked and placed onto composite charge transportation pallet **402.** Composite charge transportation pallet **402** moves along delivery system **304** in direction **406** towards plurality of flipper arms **314.**

When composite charge transportation pallet **402** reaches plurality of flipper arms **314,** plurality of flipper arms **314** will grip and lift a portion of composite charge transportation pallet **402.** When composite charge transportation pallet **402** arrives at plurality of flipper arms **314,** plurality of quick connectors **326** are positioned beneath composite charge transportation pallet **402.** When composite charge transportation pallet **402** arrives at plurality of flipper arms **314,** plurality of quick connectors **326** mechanically connect plurality of flipper arms **314** to composite charge transportation pallet **402.**

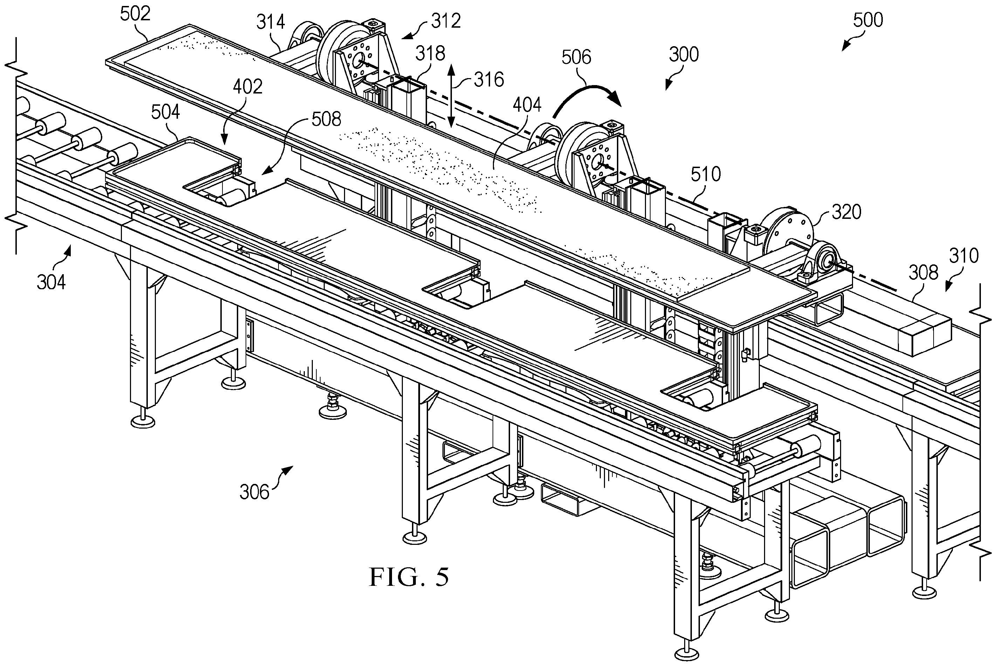

Turning now to **Figure 5****,** an illustration of an isometric view of a composite transfer system lifting a portion of a composite charge transportation pallet in a manufacturing environment is depicted in accordance with an illustrative embodiment. Between view **400** and view **500,** composite charge transportation pallet **402** has arrived at plurality of flipper arms **314.** Plurality of quick connectors **326** has mechanically connected plurality of flipper arms **314** to nesting preform transfer portion **502** of composite charge transportation pallet **402.**

In view **500,** nesting preform transfer portion **502** of composite charge transportation pallet **402** has been lifted from layup pallet portion **504** by plurality of flipper arms **314.** In view **500,** nesting preform transfer portion **502** of composite charge transportation pallet **402** is about to be rotated in direction **506** using plurality of flipper arms **314.** Rotating nesting preform transfer portion **502** in direction **506** rotates nesting preform transfer portion **502** about longitudinal axis **510** of composite transfer system **312.** Longitudinal axis **510** of composite transfer system **312** is parallel to a length of tool **308.** Longitudinal axis **510** of composite transfer system **312** extends through each rotary motor of rotary motors **320** of composite transfer system **312.** As depicted, longitudinal axis **510** of composite transfer system **312** is also parallel to a longitudinal axis of composite charge **404.**

Layup pallet portion **504** comprises a rigid frame configured to receive pressure from laying up composite charge **404** on composite charge transportation pallet **402.** Although composite charge **404** is depicted as a rectangular charge, composite charge **404** can have any desirable shape or size.

Layup pallet portion **504** further comprises a conveyor interface plate connected to the rigid frame. The conveyor interface plate interfaces with delivery system **304.**

The rigid frame has number of access cut-outs **508** configured to allow access to connectors of nesting preform transfer portion **502.** Number of access cut-outs **508** allow for plurality of flipper arms **314** to connect to nesting preform transfer portion **502** and lift nesting preform transfer portion **502** away from layup pallet portion **504.** Layup pallet portion **504** remains on delivery system **304** while plurality of flipper arms **314** lift and then rotate nesting preform transfer portion **502.**

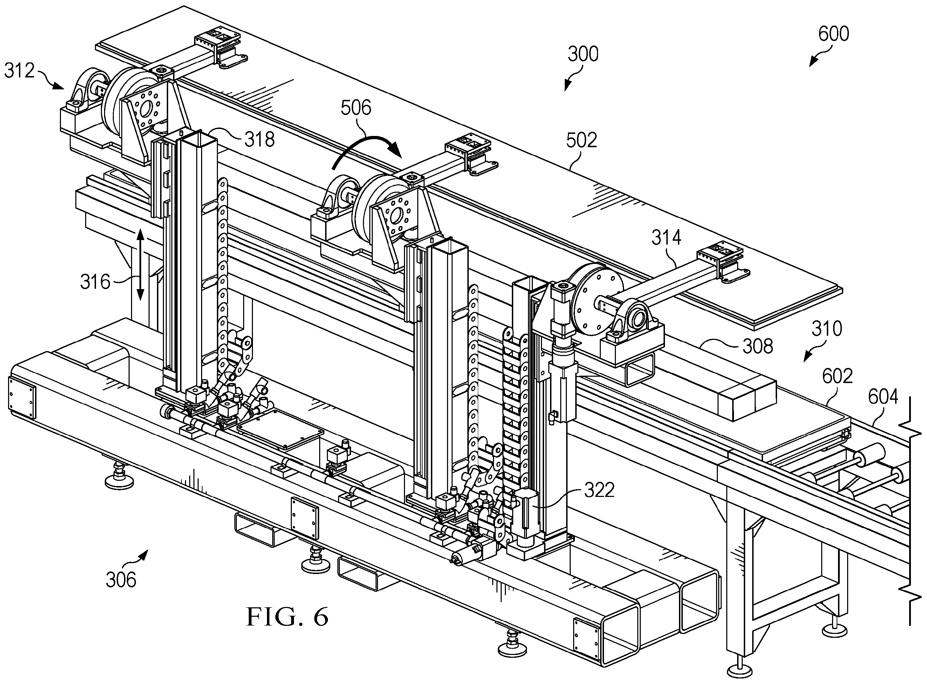

Turning now to **Figure 6****,** an illustration of an isometric view of a composite transfer system positioning a portion of a composite charge transportation pallet over a tool in a manufacturing environment is depicted in accordance with an illustrative embodiment. View **600** is a view of plurality of flipper arms **314** positioning nesting preform transfer portion **502** of composite charge transportation pallet **402** over tool **308.**

Between view **500** and view **600,** plurality of flipper arms **314** have rotated in direction **506.** By rotating plurality of flipper arms **314** in direction **506,** nesting preform transfer portion **502** has been moved from first side **306** to second side **310.** By rotating plurality of flipper arms **314** in direction **506,** composite charge **404** is now upside down. By rotating plurality of flipper arms **314** in direction **506,** plurality of flipper arms **314** flip composite charge **404** one hundred and eighty degrees. By flipping composite charge **404** one hundred and eighty degrees, a face of the composite charge **404** that is exposed while on delivery system **304** will be placed into contact with tool **308.** Composite charge **404** is maintained on nesting preform transfer portion **502** by vacuum provided by composite transfer system **312.**

As depicted, tool **308** is present on transportation pallet **602.** Transportation pallet **602** can move along delivery system **604.** In this illustrative example, delivery system **604** takes the form of a conveyor. After composite charge **404** is placed onto tool **308,** delivery system **604** can move tool **308** with composite charge **404** on tool **308** to a next manufacturing cell.

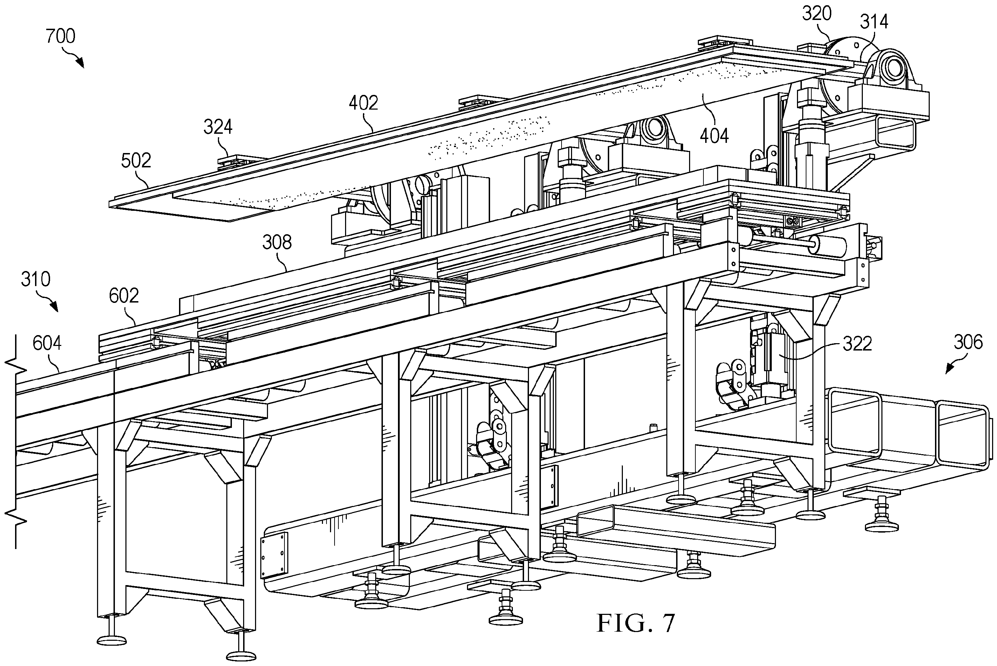

Turning now to **Figure 7****,** an illustration of an isometric view of a composite transfer system positioning a portion of a composite charge transportation pallet over a tool in a manufacturing environment is depicted in accordance with an illustrative embodiment. View **700** is a view from second side **310.** In view **700,** composite charge **404** on nesting preform transfer portion **502** is visible. Plurality of flipper arms **314** can be used to maneuver composite charge **404** on nesting preform transfer portion **502** relative to tool **308.**

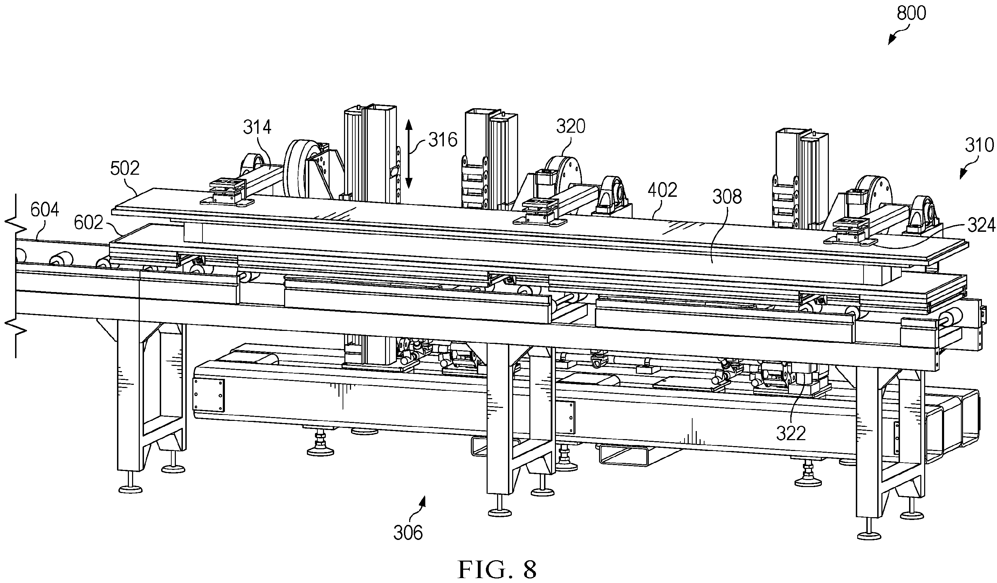

Turning now to **Figure 8****,** an illustration of an isometric view of a composite transfer system placing a composite charge on a composite charge transportation pallet in contact with a tool in a manufacturing environment is depicted in accordance with an illustrative embodiment. In view **800,** plurality of flipper arms **314** have been used to lower composite charge **404** on nesting preform transfer portion **502** into contact with tool **308.** In view **800,** plurality of flipper arms **314** have moved in vertical direction **316** towards tool 308.

In some illustrative examples, nesting preform transfer portion **502** can be lowered into contact with tooling (not depicted). In some illustrative examples, composite charge **404** is indexed. In some illustrative examples, composite charge **404** is indexed using needle grippers (not depicted) that engage with excess material.

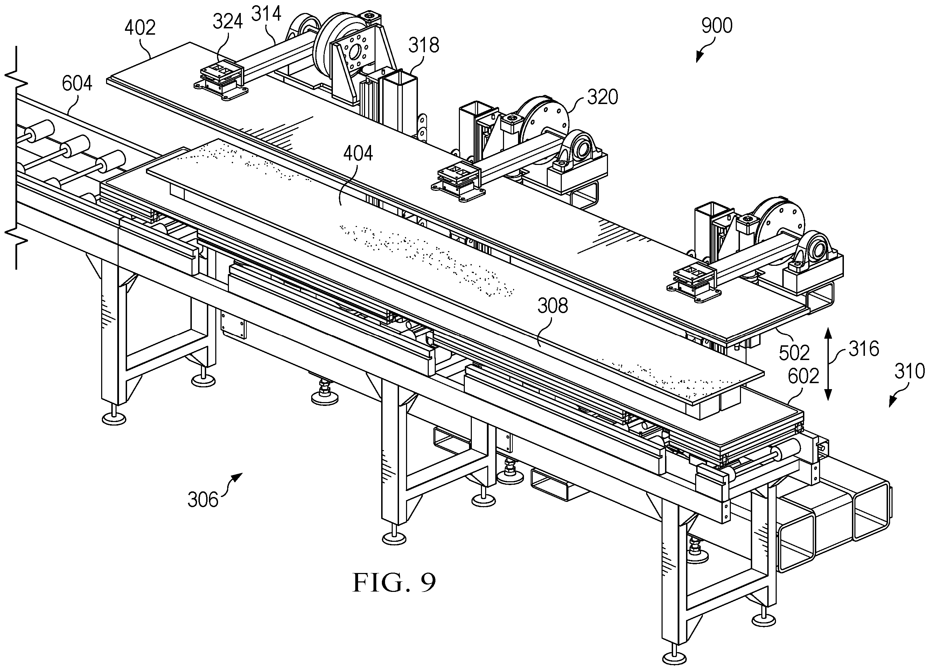

Turning now to **Figure 9****,** an illustration of an isometric view of a composite transfer system positioning after placing a composite charge onto a tool in a manufacturing environment is depicted in accordance with an illustrative embodiment. In view **900,** composite charge **404** is present on tool **308.** Plurality of flipper arms **314** has moved in vertical direction **316** away from tool **308.** Plurality of flipper arms **314** has moved nesting preform transfer portion **502** in vertical direction **316** up and away from composite charge **404.**

In some illustrative examples, between view **800** and view **900** nesting preform transfer portion **502** releases composite charge **404** by stopping the vacuum to composite charge **404.** In some illustrative examples, between view **800** and view **900,** nesting preform transfer portion **502** releases composite charge **404** by pushing composite charge **404** against tool **308** with air directed from nesting preform transfer portion **502.** After placing composite charge **404** on tool **308,** plurality of flipper arms **314** can return to a starting position to prepare for another pallet. After placing composite charge **404** on tool **308,** plurality of flipper arms **314** can rotate back to first side **306.**

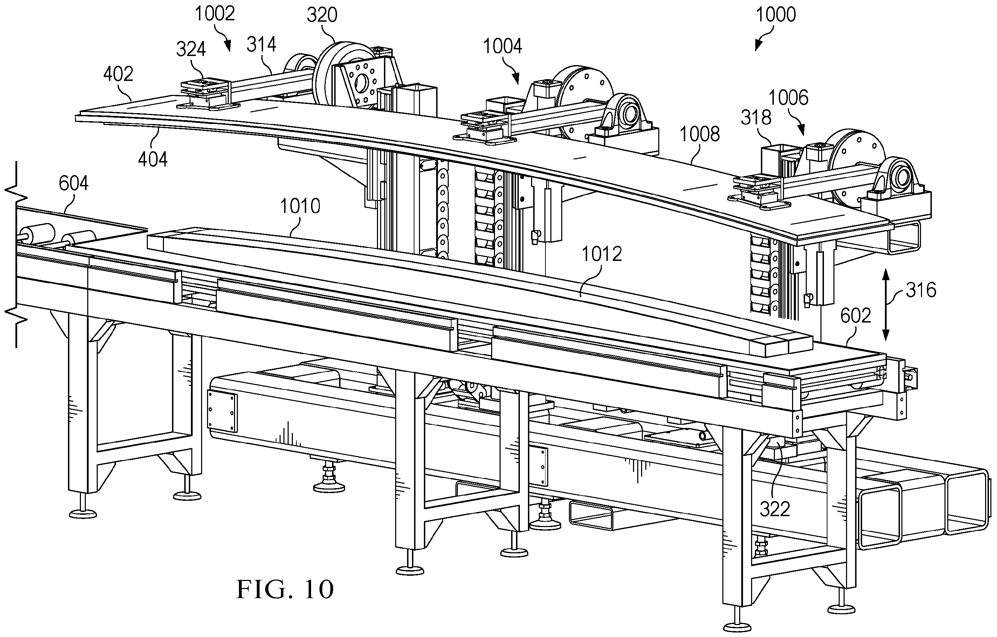

In view **700,** view **800,** and view **900,** tool **308** is planar. As a result, nesting preform transfer portion **502** and composite charge **404** are maintained in a planar configuration. In other illustrative examples, a tool with a curved surface can be present in composite transfer cell **300** instead of tool **308.** In these illustrative examples, a curvature is placed into composite charge **404** prior to placing composite charge **404** in contact with the curved tool. **Figure 10** is an example of one implementation of forming a curvature into composite charge **404.** View **1000 in** **Figure 10** would occur between view **700** and view **800** for tools with a curvature.

Turning now to **Figure 10****,** an illustration of an isometric view of a composite transfer system placing a curvature into a composite charge on a composite charge transportation pallet in a manufacturing environment in a manufacturing environment is depicted in accordance with an illustrative embodiment. In **Figure 10****,** composite transfer system **312** places a curvature into composite charge **404** on composite charge transportation pallet **402.** Composite transfer cell **300** can be used to place a composite charge in a planar configuration or with a curvature onto a tool.

In this illustrative example, tool **1010** with curved surface **1012** is present on transportation pallet **602** on delivery system **604.** Delivery system **604** can be used to transport tools of a variety of different shapes and sizes. Tool **308** of **Figures 3-9** had a planar surface. Tool **1010** has curved surface **1012.** To place composite charge **404** in contact with curved surface **1012,** composite transfer system **312** places curvature **1008** into composite charge **404** on composite charge transportation pallet **402** prior to placing composite charge **404** onto tool **1010.** In view **700 of** **Figure 7****,** composite charge **404** has been rotated to second side **310** of composite transfer cell **300.** Placing curvature **1008** into composite charge **404** in view **1000** occurs after rotating as in view **700** but prior to placing composite charge **404** into contact with tool **1010** with curved surface **1012,** similar to in view **800.**

In this illustrative example, each of flipper arm **1002,** flipper arm **1004,** and flipper arm **1006** are moved independently to place curvature **1008** into composite charge **404** on composite charge transportation pallet **402.** In this illustrative example, each of flipper arm **1002,** flipper arm **1004,** and flipper arm **1006** are moved independently by a respective vertical motor of plurality of vertical motors **322** to place curvature **1008** into composite charge **404.**

In some illustrative examples, each of flipper arm **1002,** flipper arm **1004,** and flipper arm **1006** are moved simultaneously but independently in vertical direction **316** to form curvature **1008.** In some illustrative examples, flipper arm **1002** and flipper arm **1006** are moved downward in vertical direction **316** while flipper arm **1004** is held in place. Flipper arm **1002,** flipper arm **1004,** and flipper arm **1006** are moved in a desirable way to form curvature **1008** while maintaining material properties and reducing or preventing inconsistencies in composite charge **404.**

Each respective pneumatic and mechanical connector of plurality of pneumatic and mechanical connectors **324** is configured to accommodate movements due to different vertical positions of plurality of flipper arms **314** to impart curvature **1008** in composite charge **404.** A slip plane of each respective pneumatic and mechanical connector passively matches the contour, curvature **1008,** of nesting preform transfer portion **502** of composite charge transportation pallet **402.**

Although curvature **1008** is placed into composite charge **404** on second side **310,** in other non-depicted examples, a curvature can be placed into composite charge **404** prior to rotating composite charge **404** from first side **306** to second side **310.** When a curvature is placed into composite charge **404** prior to flipping, each of flipper arm **1002,** flipper arm **1004,** and flipper arm **1006** are moved independently by a respective secondary vertical motor configured to move the respective flipper arm relative to a respective rotary motor. By utilizing a secondary vertical motor configured to move a flipper arm without moving the rotary motor, longitudinal axis **510** can be maintained for rotation of plurality of flipper arms **314.**

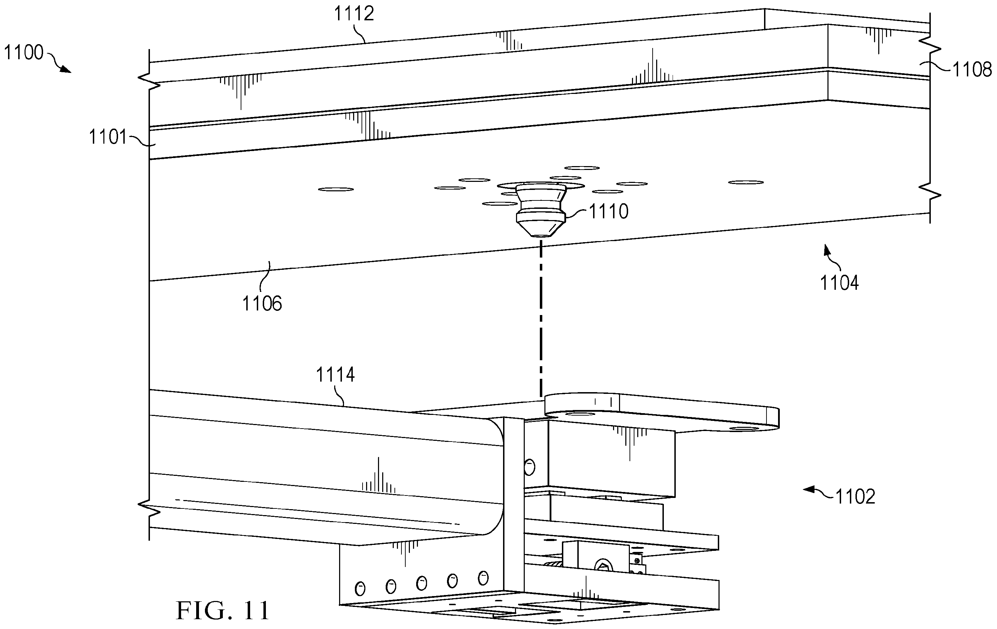

**Figures 11-15** illustrate embodiments of a pneumatic and mechanical connector for a composite transfer system in accordance with an illustrative embodiment. Turning now to **Figure 11****,** an illustration of an isometric view of a pneumatic and mechanical connector for a composite transfer system is depicted in accordance with an illustrative embodiment.

In view **1100,** pneumatic and mechanical connector **1102** is on flipper arm **1114.** Pneumatic and mechanical connector **1102** is positioned beneath nesting preform transfer portion **1104** of composite charge transportation pallet **1101.** Nesting preform transfer portion **1104** comprises vacuum plate **1106** and porous vacuum surface **1108.** In this illustrative example, composite charge **1112** is in contact with porous vacuum surface **1108.** Connector **1110** extends out from vacuum plate **1106.** Connector **1110** allows pneumatic and mechanical connector **1102** to engage with nesting preform transfer portion **1104.**

Pneumatic and mechanical connector **1102** physically interfaces with connector **1110** to mechanically connect flipper arm **1114** to nesting preform transfer portion **1104** of composite charge transportation pallet **1101.** After mechanically connecting pneumatic and mechanical connector **1102** to connector **1110,** pneumatics including at least one of air or vacuum can be provided to nesting preform transfer portion **1104** by pneumatic and mechanical connector **1102.** The at least one of air or vacuum travels through pneumatic and mechanical connector **1102** to porous vacuum surface **1108.** Vacuum provided to porous vacuum surface **1108** holds composite charge **1112** on nesting preform transfer portion **1104** of composite charge transportation pallet **1101.** Air sent through porous vacuum surface **1108** can be used to push composite charge **1112** off of nesting preform transfer portion **1104** of composite charge transportation pallet **1101** onto a tool.

Although not depicted in view **1100,** prior to connecting pneumatic and mechanical connector **1102** to connector **1110,** nesting preform transfer portion **1104** will be present on a layup pallet portion of composite charge transportation pallet **1101.** The layup pallet portion (not depicted) is configured to allow pneumatic and mechanical connector **1102** to move through a number of access cut-outs of the layup pallet portion (not depicted) to access connector **1110.** In this illustrative example, connector **1110** takes the form of a pin.

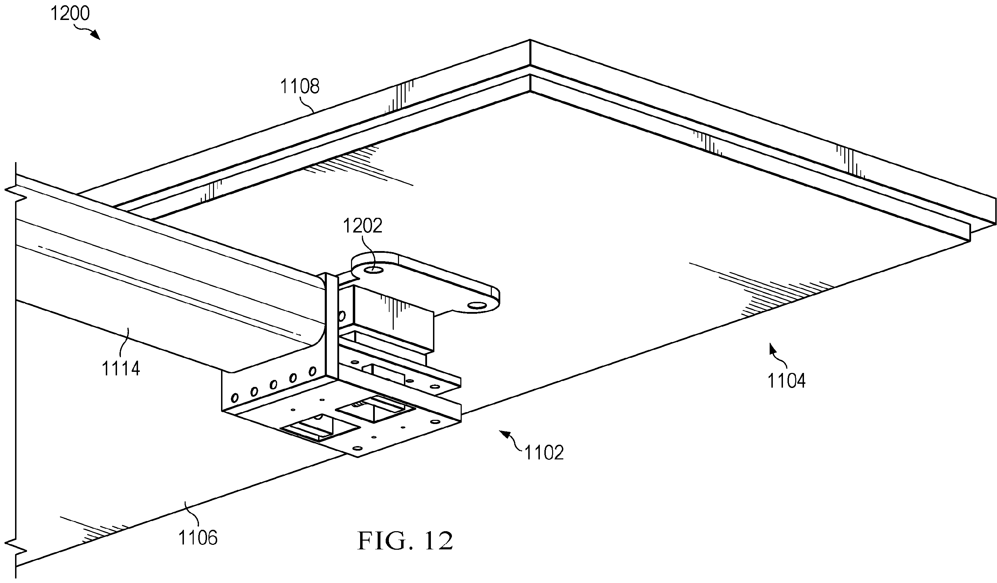

Turning now to **Figure 12****,** an illustration of a bottom view of a pneumatic and mechanical connector for a composite transfer system is depicted in accordance with an illustrative embodiment. In view **1200,** pneumatic and mechanical connector **1102** has connected flipper arm **1114** to nesting preform transfer portion **1104** of composite charge transportation pallet **1101.** In view **1200,** flipper arm **1114** can now be used to maneuver nesting preform transfer portion **1104** and composite charge **1112** on porous vacuum surface **1108.**

Between view **1100** and view **1200,** flipper arm **1114** has lifted towards nesting preform transfer portion **1104.** Pneumatic and mechanical connector **1102** has engaged with connector **1110.** Vacuum can be transferred into nesting preform transfer portion **1104** through the engagement interface. Vacuum ports **1202** are visible in view **1200.**

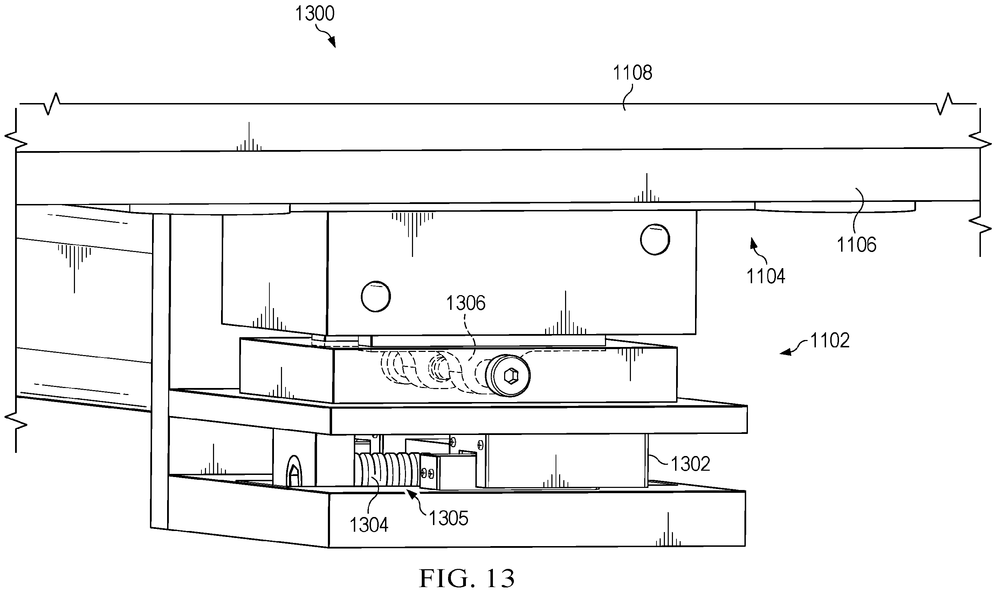

Turning now to **Figure 13****,** an illustration of a phantom side view of a pneumatic and mechanical connector for a composite transfer system is depicted in accordance with an illustrative embodiment. View **1300** is a side view of pneumatic and mechanical connector **1102** with internal joint components in phantom for ease of description.

Pneumatic and mechanical connector **1102** comprises first joint **1302** configured to allow movement in a first axis, second joint **1306** configured to allow movement in a second axis, and centering component **1305.** In this illustrative example, first joint **1302** comprises tracks on a first portion of pneumatic and mechanical connector **1102.** In this illustrative example, first joint **1302** comprises a slider joint. In this illustrative example, second joint **1306** comprises a rocker on a third portion of pneumatic and mechanical connector **1102.** In some non-depicted illustrative examples, second joint **1306** could comprise a ball joint rather than a rocker joint. A ball joint in the slip plane allows for nesting preform transfer portion **1104**
to be in contour and twist prior to the placement of composite charge **1112.**

In this illustrative example, centering component **1305** is spring **1304** in a second portion of pneumatic and mechanical connector **1102.** A number of springs, spring **1304,** provides a passive method to return the joints, first joint **1302** and second joint **1306,** to center.

A slip plane formed by the joints of pneumatic and mechanical connector **1102** passively matches a contour formed in nesting preform transfer portion **1104** of composite charge transportation pallet **1101.** The slip plane allows nesting preform transfer portion **1104** to be contoured by multiple rigid flipper arms.

Vacuum plate **1106** can be formed of any desirable material. In some illustrative examples, vacuum plate **1106** is a nesting aluminum vacuum plate that has groves cut in to allow for vacuum to be distributed throughout the entirety of porous vacuum surface **1108.** In some illustrative examples, porous vacuum surface **1108** comprises a porous polymeric material. In some illustrative examples, the porous polymeric material is a sintered high density polyethylene.

As vacuum plate **1106** is a nesting plate, vacuum plate **1106** can nest into a rigid layup pallet portion during layup. Vacuum plate **1106** is part of a removable section that can be picked and flipped.

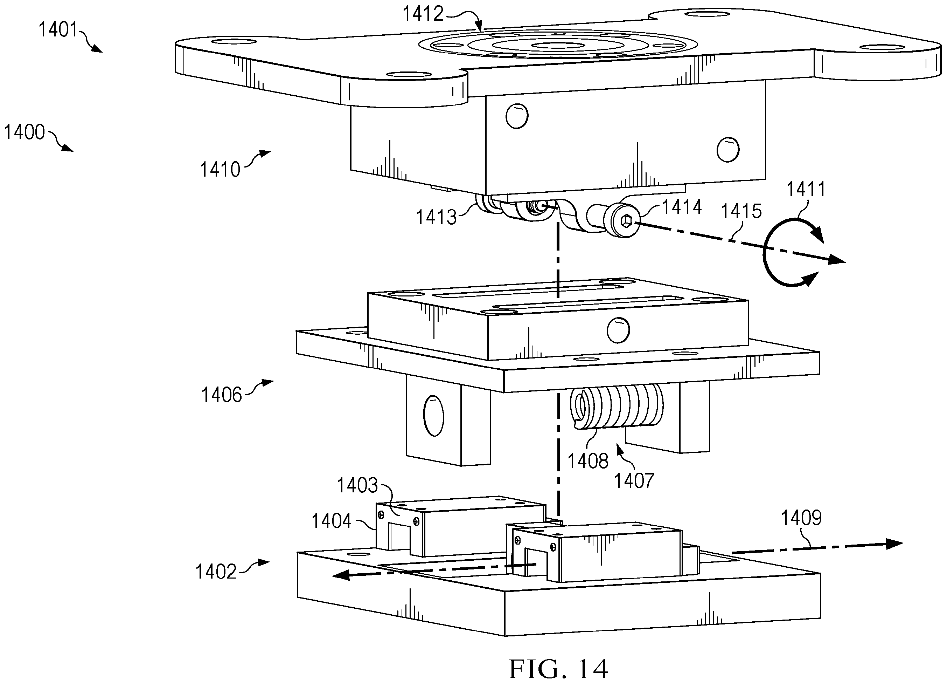

Turning now to **Figure 14****,** an illustration of an exploded view of a pneumatic and mechanical connector for a composite transfer system is depicted in accordance with an illustrative embodiment. View **1401** is an exploded view of pneumatic and mechanical connector **1400.** Pneumatic and mechanical connector **1400** is a physical implementation of one of pneumatic and mechanical connector **220,** pneumatic and mechanical connector **232,** or pneumatic and mechanical connector **242** of **Figures 2A** **and** **2B****.** Pneumatic and mechanical connector **1400** can be one of plurality of pneumatic and mechanical connectors **324** of **Figures 3-10****.** Pneumatic and mechanical connector **1400** can be the same design as pneumatic and mechanical connector **1102** of **Figures 11-13****.**

Pneumatic and mechanical connector **1400** comprises first joint **1404** configured to allow movement in first axis **1409,** second joint **1414** configured to allow movement in second axis **1411,** and centering component **1407.** In this illustrative example, first joint **1404** comprises tracks on first portion **1402.** In this illustrative example, first joint **1404** comprises slider joint **1403.** In this illustrative example, second joint **1414** comprises rocker joint **1413** on third portion **1410.** In this illustrative example, centering component **1407** is spring **1408** in second portion **1406.** Pneumatic and mechanical connector **1400** has quick connector **1412** configured to mechanically connect to a portion of a composite charge transportation pallet.

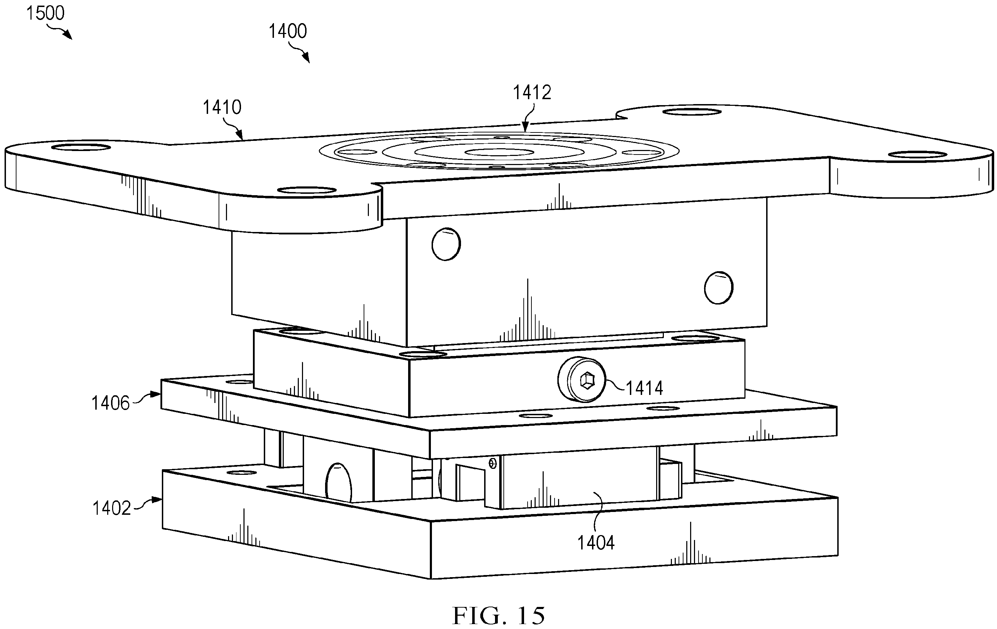

Turning now to **Figure 15****,** an illustration of an isometric view of a pneumatic and mechanical connector is depicted in accordance with an illustrative embodiment. View **1500** is a view of pneumatic and mechanical connector **1400** in an assembled state. In the assembled state, first portion **1402** and second portion **1406** are joined together by first joint **1404.** In the assembled state, second portion **1406** and third portion **1410** are joined together by second joint **1414.**

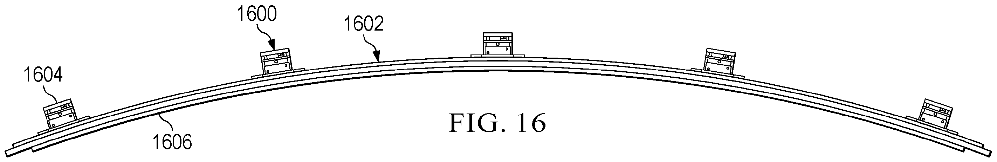

Turning now to **Figure 16****,** an illustration of a front view of a composite transfer system placing a curvature into a composite charge transportation pallet in a manufacturing environment is depicted in accordance with an illustrative embodiment. Composite transfer system **1600** can be a physical implementation of composite transfer system **203** of **Figures 2A** **and** **2B****.** Nesting preform transfer portion **1602** of a composite charge transportation pallet can be a physical implementation of composite charge transportation pallet **252** of **Figures 2A** **and** **2B****.** In this illustrative example, plurality of flipper arms **1604** is connected to nesting preform transfer portion **1602.** In this illustrative example, plurality of flipper arms **1604** comprises five flipper arms. A quantity of flipper arms in plurality of flipper arms **1604** can be selected based on curvature **1606.**

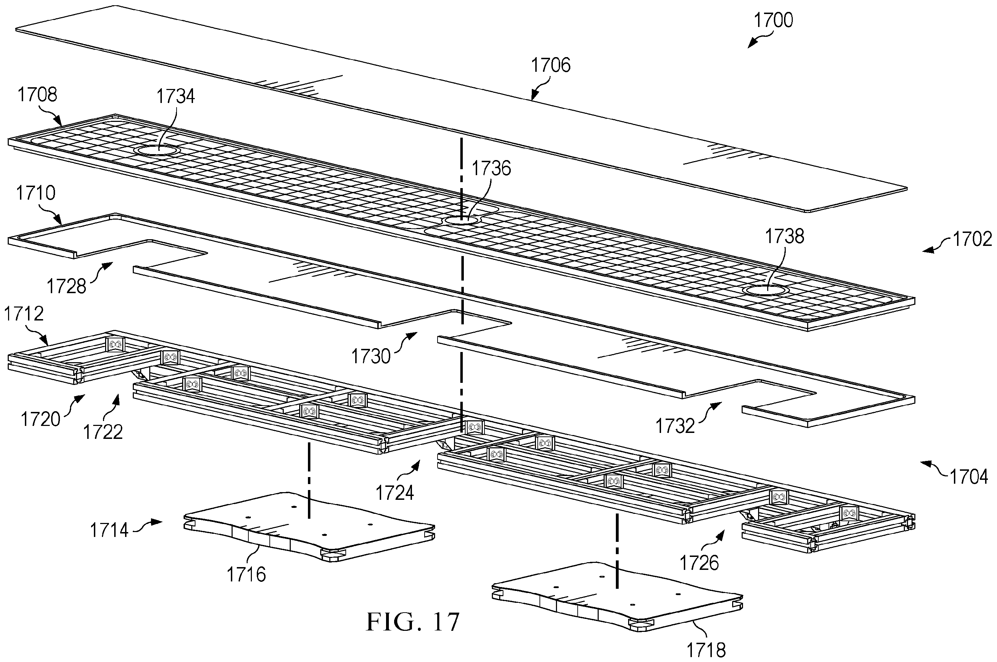

Turning now to **Figure 17****,** an illustration of an exploded view of a composite charge transportation pallet in a manufacturing environment is depicted in accordance with an illustrative embodiment. Composite charge transportation pallet **1700** is a physical implementation of composite charge transportation pallet **252** of **Figures 2A** **and** **2B****.** Composite charge transportation pallet **1700** can be an implementation of composite charge transportation pallet **402** of **Figures 4-10****.**

Composite charge transportation pallet **1700** comprises nesting preform transfer portion **1702** and layup pallet portion **1704.** Nesting preform transfer portion **1702** comprises vacuum plate **1708** and porous vacuum surface **1706.** Porous vacuum surface **1706** interfaces with a composite charge to be placed on a tool. Layup pallet portion **1704** comprises conveyor interface plates **1714,** rigid frame **1712,** and carrying plate **1710.** Conveyor interface plates **1714** create an interface between a delivery system and composite charge transportation pallet **1700.** Conveyor interface plates **1714** include conveyor interface plate **1716** and conveyor interface plate **1718.** Rigid frame **1712** and carrying plate **1710** have number of access cut-outs **1720** to provide access for pneumatic and mechanical connectors to connect to vacuum plate **1708.** Number of access cut-outs **1720** comprise access cut-out **1722,** access cut-out **1724,** access cut-out **1726,** access cut-out **1728,** access cut-out **1730,** and access cut-out **1732.**

Connectors of vacuum plate **1708** comprise connector **1734,** connector **1736,** and connector **1738.** A quantity of connectors can be selected and designed based on at least one of a size of a composite charge to be positioned or a curvature to be placed into the composite charge.

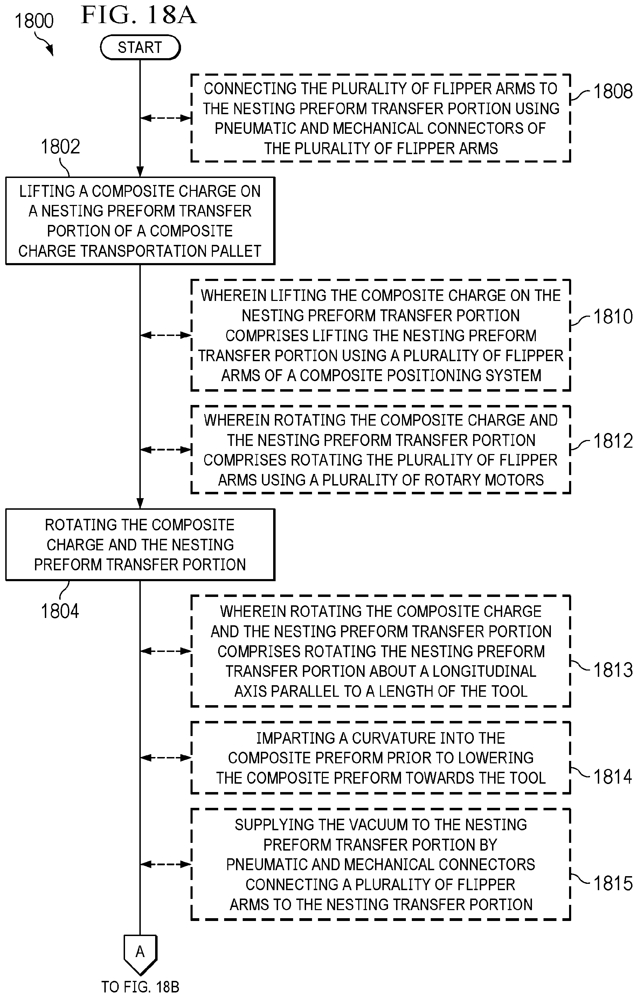

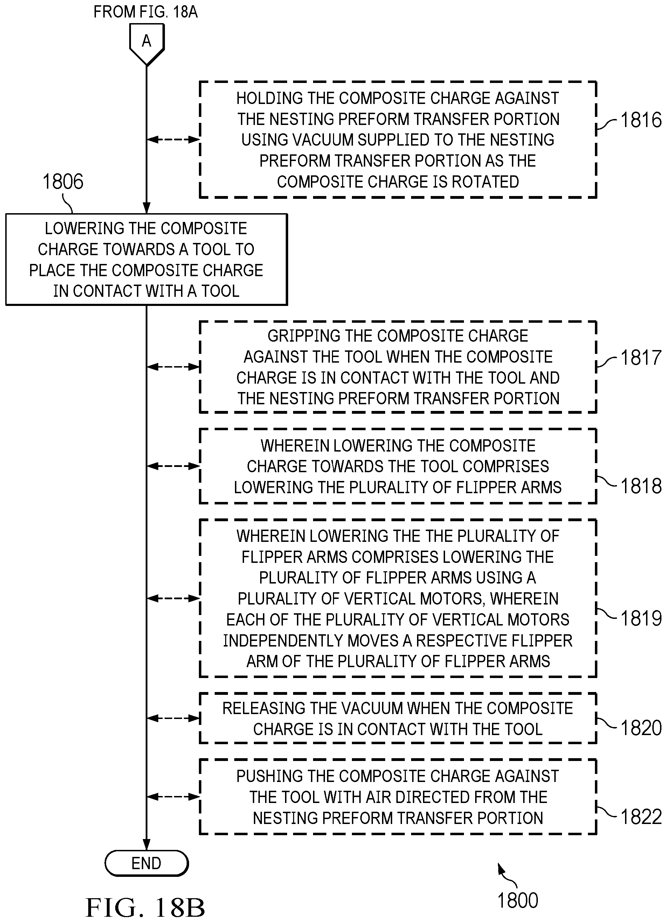

Turning now to **Figures 18A** **and** **18B****,** a flowchart of a method of positioning a composite charge is depicted in accordance with an illustrative embodiment. Method **1800** can be performed in manufacturing environment 200 using composite transfer cell **202** of **Figures 2A** **and** **2B****.** Method **1800** can be performed in composite transfer cell **300** of **Figures 3-10****.** Method **1800** can be performed using a composite transfer system having pneumatic and mechanical connector **1102** of **Figures 11-13****.** Method **1800** can be performed using a composite transfer system having pneumatic and mechanical connector **1400** of **Figures 14** and **15****.** Method **1800** can be performed using composite transfer system **1600** and nesting preform transfer portion **1602** of a composite charge transportation pallet of **Figure 16****.** Method **1800** can be performed using composite charge transportation pallet **1700** of **Figure 17****.**

Method **1800** lifts a composite charge on a nesting preform transfer portion of a composite charge transportation pallet (operation **1802**). Method **1800** rotates the composite charge and the nesting preform transfer portion (operation **1804**). Method **1800** lowers the composite charge towards a tool to place the composite charge in contact with a tool (operation **1806**). Afterwards, method **1800** terminates.

In some illustrative examples, method **1800** connects the plurality of flipper arms to the nesting preform transfer portion using pneumatic and mechanical connectors of the plurality of flipper arms (operation **1808).** In some illustrative examples, pneumatic and mechanical connectors of the plurality of flipper arms connect to pins on the nesting preform transfer portion. In some illustrative examples, the pneumatic and mechanical connectors are quick connectors. In some illustrative examples, the pneumatic and mechanical connectors provide at least one of vacuum or air to the nesting preform transfer portion.

In some illustrative examples, lifting the composite charge on the nesting preform transfer portion comprises lifting the nesting preform transfer portion using a plurality of flipper arms of a composite positioning system (operation **1810**). In some illustrative examples, rotating the composite charge and the nesting preform transfer portion comprises rotating the plurality of flipper arms using a plurality of rotary motors (operation **1812**). In some illustrative examples, rotating the composite charge and the nesting preform transfer portion comprises rotating the nesting preform transfer portion about a longitudinal axis parallel to a length of the tool (operation **1813**). In some illustrative examples, lowering the composite charge towards the tool comprises lowering the plurality of flipper arms (operation **1818**). In some illustrative examples, lowering the plurality of flipper arms comprises lowering the plurality of flipper arms using a plurality of vertical motors, wherein each of the plurality of vertical motors independently moves a respective flipper arm of the plurality of flipper arms (operation **1819**).

In some illustrative examples, method **1800** imparts a curvature into the composite charge prior to lowering the composite charge towards the tool (operation **1814).** In some illustrative examples, the curvature is created by independently moving at least one flipper of the plurality of flippers in a vertical direction. In some illustrative examples, multiple flippers of the plurality of flippers are moved vertically to impart a curvature into the composite charge and the nesting preform transfer portion.

In some illustrative examples, method **1800** supplies the vacuum to the nesting preform transfer portion by pneumatic and mechanical connectors connecting a plurality of flipper arms to the nesting transfer portion (operation **1815**). In some illustrative examples, method **1800** holds the composite charge against the nesting preform transfer portion using vacuum supplied to the nesting preform transfer portion as the composite charge is rotated (operation **1816**).

In some illustrative examples, method **1800** grips the composite charge against the tool when the composite charge is in contact with the tool and the nesting preform transfer portion (operation **1817**). The composite charge can be gripped against the tool using any desirable clamp, clip, needles, or any other desirable type of restraint. In some illustrative examples, lowering the composite charge towards the tool comprises lowering the plurality of flipper arms using a plurality of vertical motors, wherein each of the plurality of vertical motors independently moves a respective flipper arm of the plurality of flipper arms (operation **1818**).

In some illustrative examples, method **1800** releases the vacuum when the composite charge is in contact with the tool (operation **1820**). In some illustrative examples, method **1800** pushes the composite charge against the tool with air directed from the nesting preform transfer portion (operation **1822**).

As used herein, the phrase "at least one of," when used with a list of items, means different combinations of one or more of the listed items may be used and only one of each item in the list may be needed. For example, "at least one of item A, item B, or item C," may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1808** through operation **1822** may be optional.

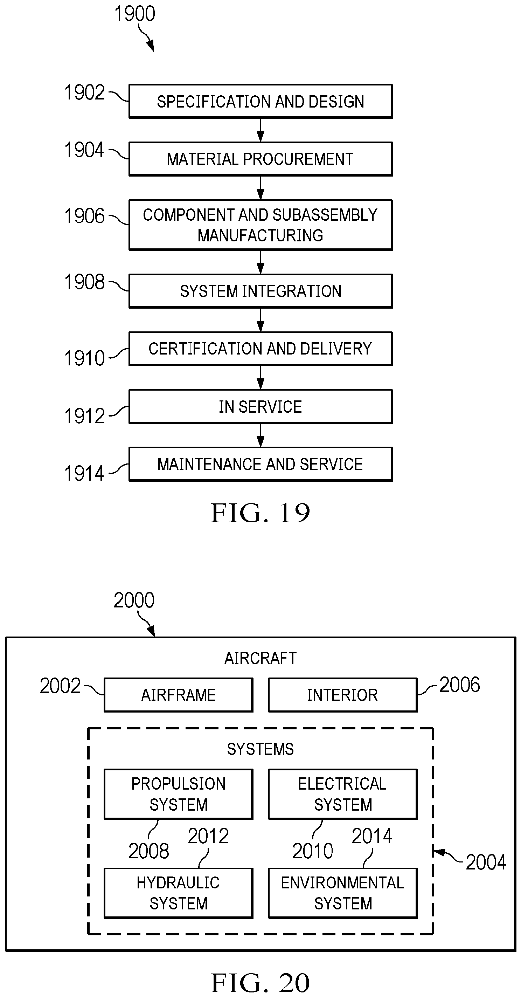

Illustrative embodiments of the present disclosure may be described in the context of aircraft manufacturing and service method **1900** as shown in **Figure 19** and aircraft **2000** as shown in **Figure 20****.** Turning first to **Figure 19****,** an illustration of an aircraft manufacturing and service method in a form of a block diagram is depicted in accordance with an illustrative embodiment. During pre-production, aircraft manufacturing and service method **1900** may include specification and design **1902** of aircraft **2000** in **Figure 20** and material procurement **1904.**

During production, component and subassembly manufacturing **1906** and system integration **1908** of aircraft **2000** takes place. Thereafter, aircraft **2000** may go through certification and delivery **1910** in order to be placed in service **1912.** While in service **1912** by a customer, aircraft **2000** is scheduled for routine maintenance and service **1914,** which may include modification, reconfiguration, refurbishment, or other maintenance and service.

Each of the processes of aircraft manufacturing and service method **1900** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 20****,** an illustration of an aircraft in a form of a block diagram is depicted in which an illustrative embodiment may be implemented. In this example, aircraft **2000** is produced by aircraft manufacturing and service method **1900** of **Figure 19** and may include airframe **2002** with plurality of systems **2004** and interior **2006.** Examples of systems **2004** include one or more of propulsion system **2008,** electrical system **2010,** hydraulic system **2012,** and environmental system **2014.** Any number of other systems may be included.

Apparatuses and methods embodied herein may be employed during at least one of the stages of aircraft manufacturing and service method **1900.** One or more illustrative embodiments may be manufactured or used during at least one of component and subassembly manufacturing **1906,** system integration **1908,** in service **1912,** or maintenance and service **1914** of **Figure 19****.**

Further, the current disclosure comprises embodiments according to the following clauses:
Clause 1. A composite transfer cell comprising:
   a delivery system on a first side of the composite transfer cell;
   a tool on a second side of the composite transfer cell; and
   a composite transfer system between the first side and the second side of the composite transfer cell, the composite transfer system comprising a plurality of flipper arms independently movable in a vertical direction and rotatingly movable to lift and place a composite charge from the delivery system to the tool.
Clause 2. The composite transfer cell of clause 1, wherein the composite transfer system further comprises:
   a plurality of vertical towers; and
   wherein the plurality of flipper arms is connected to the plurality of vertical towers by a plurality of vertical motors and a plurality of rotary motors.
Clause 3. The composite transfer cell of clause 2, wherein each flipper arm of the plurality of flipper arms comprises a secondary vertical motor configured to move a portion of a respective flipper arm.
Clause 4. The composite transfer cell of clause 2 or 3, wherein each flipper arm of the plurality of flipper arms comprises a pneumatic and mechanical connector configured to accommodate different vertical positions of the plurality of flipper arms to impart a curvature in the composite charge.
Clause 5. The composite transfer cell of clause 4, wherein each pneumatic and mechanical connector comprises:
   a first joint configured to allow movement in a first axis;
   a second joint configured to allow movement in a second axis; and
   a centering component.
Clause 6. The composite transfer cell of any of clauses 1 to 5 further comprising:
   a composite charge transportation pallet having a layup pallet portion and a nesting preform transfer portion removable from the layup pallet portion.
Clause 7. The composite transfer cell of clause 6, wherein the layup pallet portion comprises a conveyor interface plate to connect and retain the layup pallet portion on the delivery system.
Clause 8. The composite transfer cell of clause 6 or 7, wherein the layup pallet portion has a number of access cut-outs configured to allow access to connectors of the nesting preform transfer portion.
Clause 9. The composite transfer cell of clause 8, wherein each flipper arm of the plurality of flipper arms comprises a pneumatic and mechanical connector configured to connect to the nesting preform transfer portion. Clause 10. The composite transfer cell of any of clauses 6 to 9, wherein the nesting preform transfer portion comprises a vacuum plate and a porous vacuum surface. Clause 11. The composite transfer cell of clause 10, wherein the vacuum plate is formed of a material sufficiently flexible to allow for a curvature to be imparted along a length of the vacuum plate.
Clause 12. The composite transfer cell of of any of clauses 1 to 11, wherein the plurality of flipper arms is rotatingly movable about a longitudinal axis of the composite transfer system, wherein the longitudinal axis of the composite transfer system is parallel to a length of the tool.
Clause 13. A composite transfer system comprising:
   a plurality of vertical towers; and
   a plurality of flipper arms connected to the plurality of vertical towers by a plurality of vertical motors and a plurality of rotary motors.
Clause 14. The composite transfer system of clause 13 further comprising:
   a respective pneumatic and mechanical connector on each flipper arm of the plurality of flipper arms. Clause 15. The composite transfer system of clause 14, wherein each respective pneumatic and mechanical connector is configured to accommodate movements due to different vertical positions of the plurality of flipper arms to impart a curvature in a composite charge.
Clause 16. The composite transfer system of clause 14 or 15, wherein each pneumatic and mechanical connector comprises:
   a first joint configured to allow movement in a first axis;
   a second joint configured to allow movement in a second axis; and
   a centering component.
Clause 17. The composite transfer system of of any of clauses 13 to 16 further comprising:
   a respective secondary vertical motor connected to each flipper arm of the plurality of flipper arms, wherein each respective secondary vertical motor is configured to move a portion of a respective flipper arm. Clause 18. A pneumatic and mechanical connector comprising:
   a first joint configured to allow movement in a first axis;
   a second joint configured to allow movement in a second axis; and
   a centering component.
Clause 19. The pneumatic and mechanical connector of clause 18, wherein the second joint comprises a rocker joint.
Clause 20. The pneumatic and mechanical connector of clause 18 or 19, wherein the second joint comprises a ball and socket joint such that the second joint is configured to allow movement in the second axis and a third axis.
Clause 21. The pneumatic and mechanical connector of any of clauses 18 to 20, wherein the first joint comprises a slider joint.
Clause 22. The pneumatic and mechanical connector of any of clauses 18 to 21, wherein the centering component comprises a number of springs.
Clause 23. A composite charge transportation pallet comprising:
   a layup pallet portion; and
   a nesting preform transfer portion removable from the layup pallet portion.
Clause 24. The composite charge transportation pallet of clause 23, wherein the layup pallet portion comprises a rigid frame configured to receive pressure from laying up composite charge on the composite charge transportation pallet.
Clause 25. The composite charge transportation pallet of clause 24, wherein the layup pallet portion further comprises a conveyor interface plate connected to the rigid frame.
Clause 26. The composite charge transportation pallet of clause 24 or 25, wherein the rigid frame has a number of access cut-outs configured to allow access to connectors of the nesting preform transfer portion.
Clause 27. The composite charge transportation pallet of clause 25 or 26, wherein the layup pallet portion further comprises a carrying plate configured to interface with the nesting preform transfer portion, wherein the carrying plate comprises a number of access cut-outs for allowing pneumatic access to a vacuum plate of the nesting preform transfer portion.
Clause 28. The composite charge transportation pallet of any of clauses 23 to 28, wherein the nesting preform transfer portion comprises a vacuum plate, and a porous vacuum surface.
Clause 29. A method of positioning a composite charge comprising:
   lifting a composite charge on a nesting preform transfer portion of a composite charge transportation pallet;
   rotating the composite charge and the nesting preform transfer portion; and
   lowering the composite charge towards a tool to place the composite charge in contact with a tool. Clause 30. The method of clause 29, wherein lifting the composite charge on the nesting preform transfer portion comprises lifting the nesting preform transfer portion using a plurality of flipper arms of a composite positioning system.
Clause 31. The method of clause 30, wherein rotating the composite charge and the nesting preform transfer portion comprises rotating the plurality of flipper arms using a plurality of rotary motors.
Clause 32. The method of clause 30 or 31 further comprising:
   connecting the plurality of flipper arms to the nesting preform transfer portion using pneumatic and mechanical connectors of the plurality of flipper arms. Clause 33. The method of any of clauses 30 to 32, wherein lowering the composite charge towards the tool comprises lowering the plurality of flipper arms.
Clause 34. The method of clause 33, wherein lowering the plurality of flipper arms comprises lowering the plurality of flipper arms using a plurality of vertical motors, wherein each of the plurality of vertical motors independently moves a respective flipper arm of the plurality of flipper arms.
Clause 35. The method of any of clauses 29 to 34 further comprising:
   imparting a curvature into the composite charge prior to lowering the composite charge towards the tool. Clause 36. The method of any of clauses 29 to 35 further comprising:
   holding the composite charge against the nesting preform transfer portion using vacuum supplied to the nesting preform transfer portion as the composite charge is rotated.
Clause 37. The method of clause 36 further comprising:
   supplying the vacuum to the nesting preform transfer portion by pneumatic and mechanical connectors connecting a plurality of flipper arms to the nesting preform transfer portion.
Clause 38. The method of clause 36 or 37 further comprising:
   releasing the vacuum when the composite charge is in contact with the tool.
Clause 39. The method of any of clauses 36 to 38 further comprising:
   pushing the composite charge against the tool with air directed from the nesting preform transfer portion. Clause 40. The method of any of clauses 29 to 39 further comprising:
   gripping the composite charge against the tool when the composite charge is in contact with the tool and the nesting preform transfer portion.
Clause 41. The method of any of clauses 29 to 40, wherein rotating the composite charge and the nesting preform transfer portion comprises rotating the nesting preform transfer portion about a longitudinal axis parallel to a length of the tool.

The illustrative examples recognize and take into account several considerations. The illustrative embodiments present a composite transfer system that can pick up a flat composite charge from a delivery system such as a conveyor, flip it, and place it onto a tool. The composite transfer system can put the composite charge in a lengthwise contour. The composite transfer system consists of a two-part vacuum composite charge transportation pallet that interfaces with multiple stanchion arms. The stanchion arms are used to position the composite charge and to control contour. The base portion, also referred to as a layup pallet portion, of the composite charge transportation pallet sits flat on a conveyor. The top portion, or nesting preform transfer portion, of the composite charge transfer pallet is flexible and can engage with the stanchion arms to move into contour. The stanchion arms are designed with appropriate degrees of freedom and slip planes to accommodate contouring and flipping.

In some illustrative examples, a flat composite charge is conveyed into a cell on a two piece pallet. The flipper arms engage with pallet. Vacuum is turned on to the pallet. A flexible piece of the pallet is lifted. The pallet and charge are flipped one hundred and eighty degrees. Flipper arms are optionally individually actuated to contour the pallet and charge. The pallet is lowered by the flipper arms for the composite charge to contact the tool surface.
In some illustrative examples, needle grippers are used to index the composite charge on the tool. The vacuum is turned off to the pallet. In some illustrative examples, air from the pallet blows the composite charge off of the pallet. After placing the composite charge on the tool, the flipper arms return back to a starting position.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A composite transfer cell (202, 300) comprising:
a delivery system (248, 304) on a first side (244, 306) of the composite transfer cell (202, 300);
a tool (282, 308, 1010) on a second side (246, 310) of the composite transfer cell (202, 300); and
a composite transfer system (203, 312, 1600) between the first side (244, 306) and the second side (246, 310) of the composite transfer cell (202, 300), the composite transfer system (203, 312, 1600) comprising a plurality of flipper arms (211, 314) independently movable in a vertical direction (289, 316) and rotatingly movable to lift and place a composite charge (276, 404, 1112) from the delivery system (248, 304) to the tool (282, 308, 1010).

2. The composite transfer cell (202, 300) of claim 1, wherein the composite transfer system (203, 312, 1600) further comprises:
a plurality of vertical towers (205, 318); and
wherein the plurality of flipper arms (211, 314) is connected to the plurality of vertical towers (205, 318) by a plurality of vertical motors (207, 322) and a plurality of rotary motors (209, 320), wherein preferably each flipper arm (218, 230, 240, 1002, 1004, 1006, 1114) of the plurality of flipper arms (211, 314) comprises a secondary vertical motor configured to move a portion of a respective flipper arm (218, 230, 240, 1002, 1004, 1006, 1114).

3. The composite transfer cell (202, 300) of claim 2, wherein each flipper arm (218, 230, 240, 1002, 1004, 1006, 1114) of the plurality of flipper arms (211, 314) comprises a pneumatic and mechanical connector (220, 232, 242, 1102, 1400) configured to accommodate different vertical positions of the plurality of flipper arms (211, 314) to impart a curvature (271, 278, 284, 1008, 1606) in the composite charge (276, 404, 1112), wherein preferably each pneumatic and mechanical connector (220, 232, 242, 1102, 1400) comprises:
a first joint (1302, 1404) configured to allow movement in a first axis (1409);
a second joint (1306, 1414) configured to allow movement in a second axis (1411); and
a centering component (1305, 1407).

4. The composite transfer cell (202, 300) of any of claims 1 to 3 further comprising:
a composite charge transportation pallet (252, 402, 1101) having a layup pallet portion (254, 504, 1704) and a nesting preform transfer portion (256, 502, 1104, 1702) removable (258) from the layup pallet portion (254, 504, 1704), wherein the layup pallet portion (254, 504, 1704) preferably comprises a conveyor (250) interface plate (266, 1710) to connect and retain the layup pallet portion (254, 504, 1704) on the delivery system (248, 304).

5. The composite transfer cell (202, 300) of claim 4, wherein the layup pallet portion (254, 504, 1704) has a number of access cut-outs (264, 268, 508, 1720) configured to allow access to connectors (272) of the nesting preform transfer portion (256, 502, 1104, 1702), wherein preferably each flipper arm (218, 230, 240, 1002, 1004, 1006, 1114) of the plurality of flipper arms (211, 314) comprises a pneumatic and mechanical connector (220, 232, 242, 1102, 1400) configured to connect to the nesting preform transfer portion (256, 502, 1104, 1702).

6. The composite transfer cell (202, 300) of claim 4 or **5,** wherein the nesting preform transfer portion (256, 502, 1104, 1702) comprises a vacuum plate (270, 1106, 1708) and a porous vacuum surface (274, 1108, 1706), wherein preferably the vacuum plate (270, 1106, 1708) is formed of a material sufficiently flexible to allow for a curvature (271, 278, 284, 1008, 1606) to be imparted along a length (273, 280, 286) of the vacuum plate (270, 1106, 1708).

7. The composite transfer cell (202, 300) of any of claims 1 to 6, wherein the plurality of flipper arms (211, 314) is rotatingly movable about a longitudinal axis (287, 510) of the composite transfer system (203, 312, 1600), wherein the longitudinal axis (287, 510) of the composite transfer system (203, 312, 1600) 203 is parallel to a length (286) of the tool (282, 308, 1010).

8. A composite transfer system (203, 312, 1600) comprising:
a plurality of vertical towers (205, 318); and
a plurality of flipper arms (211, 314) connected to the plurality of vertical towers (205, 318) by a plurality of vertical motors (207, 322) and a plurality of rotary motors (209, 320).

9. The composite transfer system (203, 312, 1600) of claim 8 further comprising:
a respective pneumatic and mechanical connector (220, 232, 242, 1102, 1400) on each flipper arm (218, 230, 240, 1002, 1004, 1006, 1114) of the plurality of flipper arms (211, 314); wherein preferably each respective pneumatic and mechanical connector (220, 232, 242, 1102, 1400) is configured to accommodate movements due to different vertical positions of the plurality of flipper arms (211, 314) to impart a curvature (278, 1008) in a composite charge (276, 404, 1112); and/or wherein preferably each pneumatic and mechanical connector (220, 232, 242, 1102, 1400) comprises:
a first joint (1302, 1404) configured to allow movement in a first axis (1409);
a second joint (1306, 1414) configured to allow movement in a second axis (1411); and
a centering component (1305, 1407).

10. The composite transfer system (203, 312, 1600) of claim 8 or 9 further comprising:
a respective secondary vertical motor connected to each flipper arm (218, 230, 240, 1002, 1004, 1006, 1114) of the plurality of flipper arms (211, 314), wherein each respective secondary vertical motor is configured to move a portion of a respective flipper arm (218, 230, 240, 1002, 1004, 1006, 1114).

11. A method (1800) of positioning a composite charge (276, 404, 1112) comprising:
lifting (1802) a composite charge (276, 404, 1112) on a nesting preform transfer portion (256, 502, 1104, 1702) of a composite charge transportation pallet (252, 402);
rotating (1804) the composite charge (276, 404, 1112) and the nesting preform transfer portion (256, 502, 1104, 1702); and
lowering (1806) the composite charge (276, 404, 1112) towards a tool (282, 308, 1010) to place the composite charge (276, 404, 1112) in contact with a tool (282, 308, 1010).

12. The method (1800) of claim 11, wherein (1810) lifting the composite charge (276, 404, 1112) on the nesting preform transfer portion (256, 502, 1104, 1702) comprises lifting the nesting preform transfer portion (256, 502, 1104, 1702) using a plurality of flipper arms (211, 314) of a composite positioning system, wherein (1812) rotating the composite charge (276, 404, 1112) and the nesting preform transfer portion (256, 502, 1104, 1702) preferably comprises rotating the plurality of flipper arms (211, 314) using a plurality of rotary motors (209, 320), and/or
wherein the method (1800) preferably further comprises:
connecting (1808) the plurality of flipper arms (211, 314) to the nesting preform transfer portion (256, 502, 1104, 1702) using pneumatic and mechanical connectors (220, 232, 242, 324, 1102, 1400) of the plurality of flipper arms (211, 314).

13. The method (1800) of claim 11 or 12 further comprising:
imparting (1814) a curvature (271, 278, 284, 1008, 1606) into the composite charge (276, 404, 1112) prior to lowering the composite charge (276, 404, 1112) towards the tool (282, 308, 1010).

14. The method (1800) of any of claims 11 to 13 further comprising:
holding (1816) the composite charge (276, 404, 1112) against the nesting preform transfer portion (256, 502, 1104, 1702) using vacuum (221) supplied to the nesting preform transfer portion (256, 502, 1104, 1702) as the composite charge (276, 404, 1112) is rotated, and
preferably supplying the vacuum (221) to the nesting preform transfer portion (256, 502, 1104, 1702) by pneumatic and mechanical connectors connecting a plurality of flipper arms (211, 314) to the nesting preform transfer portion (256, 502, 1104, 1702).

15. The method (1800) of any of claims 11 to 14, wherein (1813) rotating (1804) the composite charge (276, 404, 1112) and the nesting preform transfer portion (256, 502, 1104, 1702) comprises rotating the nesting preform transfer portion (256, 502, 1104, 1702) about a longitudinal axis (287, 510) parallel to a length (286) of the tool (282, 308, 1010).
